# EUROPEAN PATENT APPLICATION

(11) **EP 1 878 991 A1**
(43) Date of publication of application: **16.01.2008**
(21) Application number: 07119964.0
(22) Date of filing: 20.04.1999
(51) Int. Cl.: F28F 27/02, F24D 10/00, G05D 23/00

(54) **Control process for a heat transferring device**

(30) Priority: 20.04.1998 SE 9800371; 20.04.1998 SE 9800372
(62) Divisional of application: 99925525.0
(71) Applicant: Sundsvall Energi AB, 962 23 Sundsvall (SE)
(72) Inventor: Ullberg, Sören, 860 13 Stöde (SE)
(74) Representative: Loqvist, Gabriel Mathias

(57) **Abstract**

A method and device is disclosed for controlling a heat exchanging process in a heat transferring device (3,13,23) comprising a primary fluid circuit (6,16,26) and a secondary fluid circuit (5,15,25), and comprising the steps of using a sensed temperature of the incoming fluid in said primary fluid circuit, using a sensed temperature of the incoming fluid in said secondary fluid circuit, and using a sensed fluid flow in said secondary fluid circuit, and controlling the fluid flow in said primary fluid circuit, so that the temperature of the outgoing fluid is maintained at a constant level.
According to the invention a sensed temperature of the outgoing fluid of the secondary fluid circuit is also used as control signal and the determined deviation between said sensed temperature from the temperature requirements of the outgoing secondary fluid for adjusting the fluid flow in the primary fluid circuit to maintain the temperature of the outgoing fluid of the secondary fluid circuit at a substantially constant level.

## Description

### TECHNICAL FIELD

The present invention relates to a rationally produced heat transferring device for generating heat and/or hot water in premises comprising at least one heat exchanger, and connection means for connecting the heat exchanger to an external primary fluid source to at least one user. More specifically, the invention relates to a compact heat-transferring device having integrated control and monitoring means, comprising at least one plate heat exchanger, coupling means and connection means, and arranged to produce domestic hot water and/or hot water for a heating system from hot water obtained from an external hot water source.

### STATE OF THE ART

Compact heat exchangers, such as soldered plate heat exchangers, are used both for cooling and heating. Said heat exchangers are then, as a rule, connected to a pipe system, in which a medium flows which is to be heated/cooled, and another pipe system in which a heating/cooling medium flows. Furthermore, there are arranged in the pipe system, i. a. temperature- and flow-transducers, circulation pumps and i.a. flow control valves to control the heating/cooling. Every inlet and outlet of the heat exchanger is connected in a conventional manner by means of pipes and pipe-fittings to the secondary and primary systems. This usually increases the volume of the device and constitute a large volume in relation to the size of the plate heat exchanger. A heat exchanger for simultaneously heating two mediums according to known technology is usually arranged with connections on two opposite sides, whereby this relative increase of volume becomes even more defined. If the heating of any of the two mediums shall also take place in two separate steps, distribution must again take place in at least two separate pipe-connected heat exchangers.

Stations that connect premises to district heating systems usually contain two heat exchangers, either coupled in parallel, or in so called two-stage, for simultaneous production of domestic hot water and hot water to a water carrying system for heating the premises. The system for heating the premises may comprise radiators, convectors, air-batteries and/or heating ciruits, such as floor circuits. There is a pronounced need for cost-effectively produced, small, compact, service-friendly units in the form of functional integrated modules arranged in capacity stages having few couplings and thus small risk of leakage, and which need very little supervision and maintenance. It is also advantageous if they can be quickly and rationally installed and replaced especially in smaller premises, where it would be advantageous to be able to remove the complete units.

For example, it is known from DE 195 38 601 that in plants of this type compact plate heat exchangers are used, such as, for example, Alfa Laval Industri AB's completely soldered plate heat exchanger CB 51, which usually is supplemented and set up together via a pipe system having sensor elements for temperature, flow and pressure as well as flow valves, all connected to a control system for controlling the parallel thermal processes. Furthermore, there is usually a circulation pump included for the heating system of the premises, expansion tank, air vent and charging and draining valves, respectively. Due to the set-up of these devices a substantial amount of work is required in producing, connecting, disconnecting or interchanging, as well as risk of leakage because of the many joints.

Furthermore, these units should always be accessible to the heating supplier or anyone else carrying out service. It is also advantageous if there are improvements in the concepts relating to development in the function and system, partly with regard to the aspects of production and spare-parts, and partly regarding integration of the adapted control equipment, measuring equipment and other necessary equipment to optimise and determine the energy consumption of the premises, and regarding auxiliary equipment such as circulation pumps, filters, temperature sensors, flow transducers, valves etc. Furthermore, especially for smaller premises, the unit should show co-ordinated connection junctions for the primary and secondary circuits adapted so as to quickly connect/disconnect when the unit shall be changed quickly on spot on the premises. Such a quickly interchangeable unit would also allow for advanced service-work and trimming to be carried out in a workshop ,having access to control equipment and simulation equipment.

Examples of attempts to improve the problems stated above can be seen in WO98/08029 and EP 0 092 032. The first mentioned document describes a device for transferring heat from a district heating plant or the like to a building. The device is assembled as a connection part on which connections are arranged for in and outgoing fluid, heat exchanger and flow controlling agents. The connection block is arranged with channels and is built up of two halves, which are fitted together with sealing. The heat exchanger is bolted down on the connection block.

The disadvantage with said device is that the connection block is relatively heavy and is expensive to produce since it is cast in two halves. The casting process also limits the flexibility when forming the channels in the block, among other things with regard to adapting capacity, and it also means relative costly processing of the sealing surfaces, drilling and the like for the flow regulating components and other inset components. The risk of leakage and the weight becomes an increased problem in attempts to use systems having high pressure and temperatures such as used in a district heating system. Furthermore, there is great risk of leakage since the block has large and outspread sealing surfaces, some in the joints between the block parts, some in the connections of the heat exchanger to the block. Furthermore, there appears to be no possibility of supplementing with a second heat exchanger in a simple way, i.e. a circuit for domestic hot water and a circuit for heating of the premises and neither is there a solution for quick replacement.

The document EP 92 032 describes a device having a similar function. The connection block is built up of a plurality of hollow pipe pieces joined together in a certain configuration to obtain flow channels. The connection block is further arranged with attachments for fluid and flow controlling components. The connection block is cast in one piece. A heat exchanger (not shown) is connected in a conventional manner via the attachments.

Even said described block will have a relatively high weight and also here the production will be inflexible and the cost relatively high because of the casting of the block in a certain configuration with subsequent machine-processing etc. Integration has not been followed up completely either, since the heat exchanger and the circulation pump are not arranged directly on the block.

On the whole it can be said that none of these known connection blocks show any high level of flexibility regarding capacity adaptation or simple space-saving and complete integration of auxiliary equipment, whereby the conditions for service and/or maintenance are improved. Thus, with these heat transferring devices it is difficult to meet the demand for rational, cost effective production of light and compact units, which embrace a concept, with regard to function, of a high level of integrated functions and a more rational system, allowing quick and simple dismantling/mounting of the unit during service, maintenance and the like. Neither is it easy with these known connection blocks, using rational production technology to achieve great flexibility for adaptation of the hydraulic capacity.

More specifically, in the area of heating stations for simultaneous production of domestic hot water and hot water for a water carrying system generally, and in particular, for smaller premises, there is a pronounced need for rational, cost effective production of compact units having an integrated system regarding functionality and auxiliary equipment, whereby the number of working moments, both in production at the factory and on the premises can be reduced and thereby even costs, and also whereby there is a reduction of the number of joints between the different components included and thus reduction of leakage. Furthermore a properly designed compact unit for a small plant having a high level of integrated functions allows the production, service, upgrading etc. to take place in a factory environment, whereby modern technology in the field may be exploited to the full to produce a more cost effective, and with regard to capacity adaptation, very flexible equipment. For example, experience gained in the branch points to the fact that house owners normally cannot gain anything by owning a district heating station and taking responsibility for its maintenance, since this requires special competence. It may even be that the house owner prefers not to own the station if an alternative is offered. Thus, there is a need for a district-heating station for self-contained buildings, which comprises a cost-effective, compact and totally integrated functional unit. The district heating station shall be so compact so as to be contained in a minimum sized cubicle, and thus be sufficiently discreet so as not to meet with any esthetical hindrance for mounting on a house facade.

Such a station allows energy producing companies to own and maintain district heating stations, since they have continuous access to the equipment. This means one does not have to rely on the house owner unlocking and allowing access into the house for checking and service of the district heating station and for replacement, surveillance and reading the metering equipment. Furthermore, the compactness and low weight makes it possible to handle the district heating station in its entirety as one service unit which can be quickly and simply changed there on the spot in the event of breakdown or for maintenance purposes. The heart of the station, containing all the main technology should allow for replacement by skilled service personnel in less than 5 minutes. Thereafter the exchanged unit should be maintained in a rational workshop environment and subsequently be available as a reserve module for the maintenance organisation or the service company.

Normally the capacity requirements vary a great deal for larger district heating stations. For this reason they are often exactly dimensioned, both with regard to the heat exchanger and the control valves which are a part, were consideration also is taken to where they are placed in the circuit and to the prevailing differential pressure. For smaller plants, and especially then for smaller buildings such as detached houses, there is no scope for such exact dimensioning, here one is more in need of large standardised series having, for example, different capacity stages, the same equipment from station to station. If these smaller plants are to work well and produce a good standard of comfort, despite that among themselves there are great differences in differential pressure requirements, equipment is required which can constantly keep the differential pressure at a certain determined level. This is described in "Svenska Fjärrvärme Föreningens Råd and directives, FVF 1997:13, (Swedish District Heating Association Recommendations and directions) page 9, 14 and 15, Comments page 6 and 18 and the document "Din Fjärrvärme Central" (Your District Heating Station) page 4. Thus, it should be advantageous if such a smaller district heating station in itself already on delivery from the factory contained a simple but robust and rationally produced differential pressure regulator. The known differential pressure regulators are too large and technically complicated and relatively expensive to be of use in the above described stations, thus there is a need for a simple, robust and cheap differential pressure regulator adapted for this purpose for use in central heating for smaller buildings.

Components which are included in the above mentioned devices always comprise a domestic hot water regulator, among other things. It can even be mentioned that at least for smaller premises, the capacity requirements to supply domestic hot water are the same for most of the houses. This situation creates both a need and an opening for a standardised, simple, robust easily produced and thus cheap hot water regulator to control the heat exchanger, and in certain applications, also a circulation pump for preparing domestic hot water. The equipment commercially available is often complicated, unnecessarily large and expensive and lacks any substantial function and must therefor be supplemented with additional supporting equipment. When using small soldered plate heat exchangers, experience in the trade has shown that, partly due to the very rapid heat exchanger containing just a few decilitres of water, and partly due to its simplicity and reliability, a rapid hot water regulator of the so called self-action type is preferred. Due to known problems with the time constant for temperature sensors etc. it would be an advantage if the hot water regulator for its main control was not primarily controlled by outgoing hot water temperature. Since the heat exchange process is mainly predictable, it would be an advantage if the regulator instead were controlled by the cold water flow.

Known conventional equipment for regulating, for instance, domestic hot water production in a heat exchanger carrying out temperature readings of the heated medium, bases its functionality on that there is always either a deficiency or a surplus in the parameter to be regulated and that the regulator attempts, as far as possible, to compensate the deficiency or the surplus. This procedure is generally repeated every time the equipment is exposed to a disturbance, for instance, in a flow change in the domestic hot water branch pipe. Due to the time constant in the temperature sensor and running times for the regulating motors there is always a larger or smaller deviation between the actual values and the desired values, which, furthermore, often leads to larger or smaller temperature swings.

It is therefore desirable to have a self-acting domestic hot water flow rate regulator in a device as stated above that allows for a continuous proportionally correct flow ratio between the domestic hot water which is to be heated and the hot water which is supplied to the heat exchanging process as heating medium, based on detected domestic hot water requirements. It is also desirable that the regulator can keep the heat exchanger hot during non-output time. Such a regulator or control valve shall even cope with the extremely difficult regulating cases caused when consumers draw off relatively small amounts of hot water, where one normally does not have a circulation circuit for domestic hot water. The regulator shall also be suitable for use in the characteristic and acknowledged difficult to handle "on-off" regulating, which is typical for small plants.

In a district heating unit according to the above, there is also a need for a robust, easily managed and reliable flow transducer. Known flow transducers are usually of the following types; mechanical, comprising impellers or the like, or float dips in upward going channels, restrictors, such as venturi pipes or orifice plates, fluidistors; magnet inductive sensors; acoustic sensors; turbulent flow transducers or thermal sensors such as running-time sensors or conductive sensors, among others. To measure water and/or the energy consumption in smaller heating stations, primarily cheap mechanical flow transducers are still used, comprising impellers. These various types of flow transducers are mainly for installation in pipes or the like. A common limitation in these known flow transducers is that they are difficult to arrange so that with constant exactness recognise both low and high flow in a channel having varying flows. This is due to the fact that such a known flow transducer usually works with precision only in a limited area of the flow area for which it is designed, which is usually the flow over a certain minimum starting value, i.e. the flow must reach a minimum value before said flow transducer starts to indicate. Said initial value is often relatively high and these flow transducers are often not very accurate just slightly over this starting value, i.e. at the lower measuring level. Cf. among other things the measuring law's inaccurate curves in Boverkets (Centrally Authorised In-process inspection Authority) statutes SFS 1994:26. Thus, a flow transducer according to known technology is usually dimensioned so that the expected flow always lies over the initial value and the flow under the initial value normally does not need to be determined. A further disadvantage with these known meters is that in order to measure in the lower area they must be heavily throttled. This results in undesirable large pressure drops already at moderate flow, which accentuates at greater flow. The mechanical meters with impellers, are also sensitive to wear and do not stand up to overload. For this reason they are often over-dimensioned, for the sake of durability, in relation to the requirement of the plant. Particularly in technology for heating stations it is important that the transducer can react and indicate a clear and well-defined difference between no flow and minimum flow, i.e. a distinct starting flow. Furthermore, this flow should not fluctuate to zero due to the characteristic swing, which usually occurs in large hydraulic systems, such as a district heating system, since it would then be difficult by means of periodical intermittent "checks" of the instantaneous flow to register the correct flow at the lowest measuring level.

Thus, there is a need for a flow transducer integrated in a device as stated above which has a low, and preferably constant pressure fall over the measuring area and has a low and distinct initial flow and which does not deteriorate and withstands overload, which with sufficient accuracy can be used to determined both low and high flows and which shows the same accuracy over the entire area of expected flow.

It would be an advantage if as much as possible of a compact unit mentioned above could be produced with the machinery and from the relatively simple and cheap base material and rational processing normally at hand to producers of soldered plate heat exchangers. Furthermore, it would bean advantage if the integrated equipment could be adapted so the unit does not require any post- machining and assembling could be carried out in a simple and rational way. Furthermore, it would be an advantage if also such conventional equipment could be adapted in a simple and effective manner for an assembly as described above.

### THE INVENTION

The object of the invention is to develop the above mentioned type of compact heat exchanger device, and especially comprising soldered plate heat exchanger, for heating and hot water preparation for premises, so as to integrate them as far as possible with a functional and flexibly formed connection block by rational and cost favourable production and to develop and adapt suitable components and adapt conventional components for controlling and monitoring the thermal process.

This is achieved according to one aspect of the invention in that it is characterised by a connection block connected to the soldered plate heat exchanger by soldering, and that, according to a preferred embodiment, the soldering of the plate heat exchanger and the soldering of the block to the plate heat exchanger takes place simultaneously.

According to a further aspect of the invention, it is characterised in that the connection block is built up of a plurality of plates arranged with channels and/or outlets, which form the inner channels and in that the plates are soldered to each other.

According to yet another aspect of the invention, an object of the invention is to disclose a compact heat transferring device, which in addition to not taking up much space and being flexible, has many integrated functions and components for connecting the heating and heated mediums, as well as controlling and monitoring the thermal process in the heat exchanger.

It is pointed out that in this context and in what is to follow, starting from the aforesaid, that said connection block shows a degree of "intelligence" in that it is formed and equipped to distribute and control the flow in and out of the device starting from a desired thermal process and is not just one simple connection device or type of adapter plate intended to facilitate the connections. In the following the connection block according to this definition is termed "intelligent connection block".

According to a further definition of "intelligent connection block", comparison can be made with an electrical equivalent in the form of a so-called IC-circuit or circuit board but intended for an hydraulic circuit, i.e. surface mounting technology with components which extend by differing lengths or levels down into the block.

A heat-transferring device built up according to the present invention shows a number of advantages. The production, to a large extent, is simplified compared to known technology in that the device is formed with a soldered plate heat exchanger with an intelligent connection block soldered to it, all of which may be produced with the equipment and the competence normally available where soldered plate heat exchangers are made. If the intelligent connection block, according to one aspect of the invention, is connected directly to the heat exchanger and the whole "package" is soldered together simultaneously, a very rational production process is achieved. When compared to the above-mentioned known technology and particularly to the still dominant conventional production method with pipes, it essentially brings down the production costs for the entire device. This becomes more obvious in the fully developed version because the intelligent connection block here contains inner channels to which functions and components can simply and quickly, without need of post-machining, via surface mounting can be connected to outlets, obtaining on the whole a very compact and service friendly device.

According to one embodiment the device according to the present invention comprises only one heat exchanger, preferably arranged as a water heater for domestic water to be heated by heat exchanging with hot water from a boiler or the like. The intelligent connection block connected to the plate heat exchanger comprises, thus, flow distribution and flow accumulation means to allow filling of the primary fluid circuit, the boiler water circuit, with cold water taken from a secondary fluid circuit, such as, cold water to the water heater. The intelligent connection block also comprises controlling means for heating water in the water heater, whereby, preferably, the outflow of hot boiler-water from the water heater is controlled from the flow of domestic hot water in the water heater. The intelligent connection block may also contain one or several compensation units for controlling the flow of hot boiler-water, which is described more in detail in the following.

According to a preferred embodiment great flexibility when adapting capacity is achieved, in that configuration, design and dimensioning of the inner channels may easily be adapted, and when needed, adjusted for variable or modified capacity needs between units, which creates favourable conditions to simply and reliably integrate sensors included in the controlling means. The intelligent connection block is thereby built up of an eligible number of channel-forming plates, channel plates, intermediate layers and at least two end pieces. The channel plates, in their turn, according to a preferred embodiment, are built up of a plurality, and from case to case eligible number of plate-shaped elements having outlets or intermediate walls. Said outlets and/or intermediate walls in the composite connection block form partly a channel system having inner channels for inlet and outlet of the fluids into and out of the circuit of the heat exchanging device and for the distribution of the fluids among said circuits and/or integration of two or several outlets out of these circuits, and partly create space for integrated equipment such as sensors, adjusting means, differential pressure regulators etc. The end-piece plates preferably comprise attachments for connecting said channels to external circuits, such as the consumer and external sources and attachment fittings for installation of control- and monitoring equipment etc. A channel plate comprising a plurality of thinner plate-formed elements is preferably arranged so that the dimensions of the channels and configuration is fixed by a combination of the shape of the holes and the recesses and positioning and of the stapling range of the plate-shaped elements, the thickness and number.

A further advantage obtained by the flexibility of a channel block built up of channel plates according to this embodiment is that the inner channels are easily arranged to change plate or level if so is required to avoid any hindrance, for instance, by another channel, an attachment device, auxiliary equipment or the like. Such exchange or shifting of the channels between plates or levels in an intelligent connection block can also be well-founded in that one needs to change the direction of the channel to obtain optimum orientation of filters, pumps, valve regulators, sensors and the like, especially for optimum location of the seats, bushings and the like in such equipment. Said connection block comprising inner channels, which are shaped and dimensioned by the channel plates provided with recesses, piled in a desired order on each other and to a desired height on the channel plates, provide good conditions to easily produce an intelligent connection block having very good functional integration and adaptation of capacity. For example filter units, differential pressure regulator, pumps, control valves, flow transducer, temperature sensor and similar equipment may be installed integrated with the intelligent connection block and with connections on a suitable outer surface on the intelligent connection block. The channel plates' end-pieces, attachments and thinner plate-shaped elements of the intelligent connection block are preferably joined by furnace soldering to a separate unit that disassembly-wise, or, preferably, fixed by soldering, is docked against the heat exchanger's connections, or completely integral with the heat exchanger as one of its end pieces, and particularly then in a simultaneous soldering process.

To obtain highest rationality in production and flexibility for hydraulic capacity adaptation it is preferable that from thinner plate material all the elements included or the layers in the intelligent connection block are punched out. The channel plates and/or the thin plate-shaped elements can, however, be produced according to several possible methods such as; moulded, injection moulded or pressed in plate or "blown", which means that two plates are soldered to each other on certain opposing surfaces and that the plates are made to deform by means of introduction of, for example, air pressure, so that the channels are formed from the unsoldered routes. The plates may be produced by cutting or punching out of material having eligible thickness, which gives certain flexibility for capacity adaptation in spite of the fixed programming of the cutting machines or appropriate punching tools. The channel plates may also be produced in a reversed way, so that only necessary partition walls or intermediate walls are built up in the channel plates, so that when the plates, end pieces and optional intermediate plates are brought together in a pile they form walls between the channels. The channel block may also be produced out of a more complete piece of material wherein necessary channels are drilled or milled out.

According to a preferred embodiment the device comprises an intelligent connection block having co-ordinated main connections which are joined to a coupling block. On a flat intelligent connection block the main connections are preferably arranged on one of the large surfaces of the connection block and connected against a coupling block. Preferably, the attachments of the main connections and the coupling block are arranged so that the coupling block may be quickly connected to/disconnected from the attachment pieces of the intelligent connection block. The coupling block comprises attachments for the external system's connection to the heat-transferring device, which is described more in detail in the following, as well as coupling valves for closing/opening the inflow of fluid from/to these systems. The main connections may advantageously be arranged on the large surface of the intelligent connection block which is turned away from the heat transferring circuits whilst the sub-connections are preferably arranged on the other large surface of the intelligent connection block, which is turned towards the heat transferring circuits. An extremely compact device may be obtained if both the main- and sub-connections are arranged on the large surface of the intelligent connection block facing the heat transferring circuits. Even in this case, as can be seen from the following, it is advantageous to co-ordinate the main connections to attach against a coupling block. The coupling block may also be arranged with coupling valves to cut off and open the main connections, whereby at least two of the coupling valves are co-ordinated for simultaneous opening, closing, respectively of the co-ordinated valves.

According to one embodiment of the heat transferring device according to the invention, it comprises means for two simultaneous parallel thermal processes, whereby heat is transferred between one primary fluid and two secondary fluids obtained from an external source, where the second heat transferring circuit preferably comprises a shunt circuit with a shunt pipe to lead the return of the primary fluid from the consumer to the primary fluid's feed line to the consumer. Such a device has a coupling block and an intelligent connection block having a plurality of main connections associated with the external primary fluid source and two user circuits for the primary fluid and two secondary fluid's inflow and outflow to and from the device and a plurality of sub-connections associated with the heat exchanger and the second heat transferring circuits inlet and outlet, for the inflow and outflow of the fluid to and from respectively, the two heat transferring circuits. Furthermore, in the inner channels, there are flow distributing means arranged to distribute the primary fluid's inflow between the inlets of the two heat transferring circuits for the primary fluid and/or bring together and control the primary fluid's outflow from the outlets for the primary fluid of the two parallel heat transferring circuits, whereby the number of main connections is less than the number of sub-connections.

Also the intelligent connection block comprises in the same way as previously described for the general embodiment, flow distributing/flow accumulating means to distribute an incoming flow and/or bring together two outgoing flows and controlling means to control the thermal process of the heat exchanger. Obviously, the intelligent connection block comprises also control means for controlling the process in the second heat transferring circuit. Preferably the heat exchanger and the second heat transferring circuit are coupled together in parallel. Such a heat transferring device, intended as a heat station for producing domestic hot water and hot water for a heating system, preferably comprises a soldered heat exchanger for producing domestic hot water and a shunt circuit for producing hot water for a heating system, where return of hot water, from the heating system, is shunted into the hot water feed pipe before being conveyed to the heating system to bring down the temperature of the hot water conveyed to the heating system.

According to a preferred embodiment, the second heat transferring circuit also comprises a heat exchanger. Preferably, for improving the possibilities of obtaining a compact rationally produced modular device, both heat exchangers are soldered plate heat exchangers.

The plate heat exchangers are both arranged with all inlets and outlets on the same end piece, whereby the plate heat exchangers have a connecting end piece and a back end piece. In this case a first plate heat exchanger is arranged to lie against the second plate heat exchanger in such a manner so that the first plate heat exchanger lies with one of its end pieces against one of the end piece's of the second plate heat exchanger. Preferably, in this connection the first plate heat exchanger shows a through-channel inside the inlets, outlets respectively, whereby the inlets and outlets of the second plate heat exchanger are co-ordinated with the first plate heat exchanger's inlets and outlets in such a manner so that the second plate heat exchanger's inlets and outlets are coupled together with through-channels arranged in the first plate heat exchanger. The through-channels, which are arranged in the inlets and outlets of the first heat exchanger, comprise in this case an integrated part of the second heat exchanger's inlets and outlets, respectively. Thus, the plate heat exchanger's inlets and outlets will be co-ordinated in such a manner that;
- the channel for the primary fluid's inlet to the second heat exchanger is joined with or arranged in the first heat exchanger's inlet for the primary fluid
- the channel for the primary fluid's outlet from the second heat exchanger is arranged in the first heat exchanger's outlet for the primary fluid,
- the channel for the second secondary fluid's inlet in the second heat exchanger is arranged in the first heat exchanger's inlet for the first secondary fluid, and
- the channel for the second secondary fluid's outlet out of the second heat exchanger is arranged in the first heat exchanger's outlet for the first secondary fluid. Preferably, both the heat exchangers during production are soldered together into one unit having the through channels through the first plate heat exchanger in the shape of pipes which are adapted to take up movements and energies created by thermal longitudinal changes.
   The primary fluid can be an arbitrary heating medium but according to a preferred embodiment the external primary fluid source is a district heating plant which supplies a primary fluid in the form of hot water to a heating station in a smaller building for producing domestic hot water and hot water for the building's heating system. Such a heating station comprises;
- a first heat transferring circuit in the form of a plate heat exchanger arranged for producing domestic hot water, whereby cold water is heated with hot water from a district heating network
- a second heat transferring circuit in the form of a plate heat exchanger or a shunting circuit for producing hot water to a circulation circuit for water-carried heating and
- an intelligent connection block in the form of an intelligent connection block comprising inner channels having controlling means for the thermal processes, flow distributing means for the inlets and outlets of the district heating water, in and out of, respectively, the heat transferring circuits, distribution means for refilling of the heat exchanged circulation circuit and that the main connections of the heating station are co-ordinated to a coupling block on one of the large surfaces of the intelligent connection block, whereby said coupling block, preferably arranged in the form of a valve block having co-ordinated connection valves for cutting off the heating station from the externally connected circuits. Furthermore, such a heating station according to the present invention preferably also comprises integral temperature sensors, flow transducers and energy meters as well as means to draw off one or several of the fluids, at least the primary fluid. Preferably, the means for controlling and monitoring the thermal processes in the heat exchanger, such as valves, flow transducer for the energy meter, circulation pumps and the like, as well as valves for refilling the circuits and safety valves or similar means for ensuring the circulation and desired pressure in the circuits are arranged integrated in the intelligent connection block or at least joined to a modular unit of the intelligent connection block. By such means a rationally produced, compact modular heating station having few and reliable assembly joints, comprising one or two plate heat exchangers and an intelligent connection block with a high degree of functional integration and system planning is achieved. The compact heating station, by means of the coupling block, is easily and simply detachable from the connected outer circuits and thus, easily replaced for service, repair, trimming, upgrading or similar work.

Such a modular heating station comprising a heat transferring device according to the present invention may advantageously be accommodated together with an expansion vessel in a discreet apparatus-cupboard which is installed so that it is always available to the operator of the district heating network, independent of the house owner. The apparatus-cupboard should comprise sufficient insulation so that during the prevailing conditions at the installation site in winter it can maintain a frost-free environment in the cupboard even during a longer shutdown, for example a breakdown lasting at least 24 hours. The cupboard may be installed so that air to the cupboard communicates with the building, whereby a change of air between the cupboard and the building may take place. Such change of air reduces the risk of the temperature inside the cupboard becoming too low or too high. The cupboard containing the heating station may be mounted on a facade of the building, or in an outhouse such as a storeroom or a garage or stand detached. The advantage with mounting on a facade of the building or outhouse is that the risk and susceptibility to cooling during a breakdown in the winter is essentially reduced. The bottom of the cupboard is at least partly open and connects with a plinth or the like against the service pipe of the district heating system, which enters a so-called district heating culvert. Obvious advantages with a compact, easily accessible district heating station containing a heat transferring device according to the present invention and having co-ordinated connections are;
- Cheaper and simpler culvert connection of the service pipe of the district heating system;
- A more rational pipe-construction;
   - No expensive sealing problems with regard to pipes through under g round walls.
- Continuously accessible "main valves";
- Reduced risk of damage in and on the building caused by leakage;
- No building space is required;
- Cheaper, simpler and more rational installation and connection;
- Rational and highly functional integrated district heating station assembled and trimmed prior to taking into operation;
- May be delivered from factory with energy meter and regulating equipment;
- Can accommodate even cold water meter;
- Continuously accessible meter for service, replacement and reading;
- Continuously accessible district heating station for service, up grading, replacement etc;
- A compact unit having a high degree of integrated functions;
- Easily and quickly disassembled;
- May be serviced and tested in a good environment, such as a workshop;
   - Light weight, preferably under 20 kg, and from a working environment aspect, frequently may be handled by an employee; and
- Simplified management.

In all, many of the advantages lead the way to new possibilities for heating-suppliers to develop a new system of thought with regard to connection and managing of district heating in smaller buildings. Not least, this means a development of clearer and more suitable boundaries and responsibilities for respective customers and suppliers with regard to construction and commitment.

According to a further variation of the present invention, the intelligent connection block may be inserted between any of the stages in a so-called two-stage connected district-heating station so as to lead in cold water and lead out the district-heating water from a pre-heating stage and to bring together in the first stage cooled district heating water and, dependent upon the embodiment, also preheated cold water. In this way even a two-stage connected district central heating may be produced without any requirement of a craftsman assembling the pipes.

The controlling means may include at least one differential pressure valve, which by variations in the pressure difference between the primary fluid at the inflow into the device and at the outflow from the device stabilises the pressure difference between inlets and outlets. Preferably the differential pressure regulator is arranged to open at a pressure difference below a predetermined value and to close at a pressure difference exceeding a certain value. Preferably the device according to the invention includes a differential pressure regulator arranged in the intelligent connection block, thereby allowing uniquely simple and reliable performance. This simple and compact design makes it possible, among other things, to arrange the disk of the valve pressure-balanced for the static pressure in the primary fluid and thus large membranes and bulky spring arrangements may be avoided. Furthermore, the conventional membrane can be completely replaced by a simple piston construction, since eventual minor leakage over this is not considered to interfere with the function. The differential pressure regulator is preferably at least to a degree, arranged integrally with the channels of the intelligent connection block, whereby the pressure venting of the valve disc and the pressure reducing function is achieved in a very advantageous manner, in itself new. The opening force from the primary fluid's inlet pressure, which is put upon the valve disc, is outbalanced via the pressure unloading function, on the valve spindle and thereby valve disc of a closing force working in the opposite direction. The closing force is created also by the inlet pressure and is as great as the opening force but is in the opposite direction. A further closing force is created in that the primary fluid's reducing inlet pressure after the disc and the primary fluids outlet pressure from the device is channelled, both internally in the device, to load each side of the valve piston, which is fastened to the spindle. The pressure difference between them hereby causes a tendency to close the valve. It is, furthermore, preferred if the latter closing force is counteracted by a created spring force, which is achieved by a special spring arrangement arranged in the differential pressure regulator.

The controlling means preferably include at least one domestic hot water regulator or a combination of a domestic hot water regulator and a pump or the like to control the primary fluid's flow through the heat exchanger for the domestic hot water. The domestic hot water regulator, which in the present invention is described as being of two main variations each intended for their own particular main application, is based upon a flow transducer. This is preferably hydraulically associated with a controlled valve, so that based on the reading of the inflow of cold water for production of domestic hot water, when required after compensation, it controls the outflow of the hot water return from the external hot water source out of the heat exchanger. The flow transducer comprises a measuring piston, a hydraulic main cylinder, an axially moveable hydraulic piston in the main cylinder, which by the a substantially weak measuring piston spindle or a measuring piston spindle unloaded against the static pressure existing in the channel pressure is connected to the measuring cylinder. The flow transducer, for certain applications, may also be provided with an electric circuit breaker for controlling a circulation pump. The controlled valve includes a hydraulic slave cylinder, an axially moveable hydraulic piston in the slave cylinder, a valve disk, a valve seat and a valve spindle, which connects the slave cylinder's hydraulic piston with the valve disk.

The aforementioned and the following mentioned controlling means having several integral means in the intelligent connection block, can be obtained directly from the market, but adapted conventional equipment. Thus, it is preferable to adapt such equipment in an assembly in the intelligent connection block in such a way so it obtains a design where the intelligent connection block does not require post-machining and does not need great tolerances. This is achieved in the present invention, for instance, by a valve which is more closely described in the following, by the valve seat via fastening means being joined to the valve housing or the bushing, preferably detachably connected via, for instance, threads. The fastening means, for example, may be in the shape of a pipe, in which the spindle and the disk may move, and together with the valve seat be fixed at the end of the pipe. The pipe is further arranged with openings to allow through flow and forms a spoked valve seat fixture. Furthermore, the valve seat is sunk into the outlet opening of the channel block, for instance, for the district heating water from the heat exchanger, and is sealed against the opening by means of an O-ring seal. This design provides a considerably simpler method of production and assembly compared to conventional designs, because no machining requiring high tolerances is needed in the block to achieve a valve seat or to fit a valve seat which fits well with the spindle and the disk. Because the valve seat is included already at the factory as an integral part of the valve there is always a good fit and the O-ring seal means that the tolerances in the channel in which the valve seat is placed do not need to be so high. In an analogue manner the fixtures of the valve bushing are shaped and sealed to the matched fastening attachment in the channel block and are tightened by threaded, nuts, slotted screws or the like. In all, in this manner, a good capacity for absorbing tolerances in applications is achieved.

The flow transducer's hydraulic cylinder, by means of a hydraulic pipe is associated with the controlled valve's slave cylinder in a hydraulic system, whereby a change in the flow as sensed by the measuring piston, changes the position of the slave cylinder's hydraulic piston in the slave cylinder and thereby the valve's opening degree. The hydraulic system can also include an arbitrary number of compensating units having hydraulic cylinders associated with the slave cylinder. Said compensating units have hydraulic pistons associated with a sensor and arranged so that based on the variable value read by the sensor, preferable a temperature, the position of the slave cylinder's hydraulic piston in the slave cylinder is influenced and thereby the opening degree of the valve. Such a compensating unit, according to a preferred embodiment, is arranged with a temperature sensor to read the temperature of domestic hot water flowing out of the heat exchanger, so as to avoid overheating, a so-called scalding guide. This comes into action if the temperature of the domestic hot water from the hot water boiler's heat exchanger is so high that injury to consumers could occur. The compensating units may also, in certain embodiments, be allowed to influence the flow-through of the primary water via the valve's slave cylinder, so that during periods when essentially no output of domestic hot water takes place, maintain the heat of the domestic hot water in the water heater.

Other compensating units may be arranged when required to sensor the differential pressure and/or the temperature of the incoming primary water and when required also compensate for variations in these as well as providing a heat maintaining function. According to a preferred embodiment of the hot water regulator, the control valve is arranged with means to correlate registered cold water flow and temperature readings on incoming district heating water to the required temperature of outgoing domestic hot'water as well as comprising a built-in function for maintaining heat. Such means obviously include adjustment functions whereby they are adapted to the existing conditions of the heat exchanger and building in question. By means of the above described heat exchanger, the hot water regulator with the flow transducer and compensating elements correlate the flow and temperature variable-readings with the setting of the opening degree of the controlled valve, and a desired temperature for domestic hot water is obtained essentially influenced by the fluid flowing into the heat exchanger. Compensation of scalding-guide type, which based on divergences from the desired temperature, adjusts the opening degree of the valve, is preferably used in cases where such divergences, which can occur because of disruptions or errors in the process, can cause injury.

The basic difference between a control valve according to the invention and temperature controlled traditional control equipment for regulating domestic hot water production in a heat exchanger is that the traditional regulating is based on the fact that there is always, among other things, because of the time constant in the temperature sensor, settings etc., created either a deficiency or a surplus in the parameter which shall be regulated, which the regulator thereafter attempts as far as it is able, to compensate for. This procedure normally is repeated at every disruption in the equipment, for instance, at a flow change in the domestic hot water outlet. Since a control valve according to any of the aforedescribed embodiments of the invention always provides a proportionally correct flow condition between the heating and the cooling water in the heat exchanging process, it may be assumed that central heating comprising a control valve according to the invention, intended to control the production of domestic hot water, provides essentially improved comfort and the dilemma with luke-warm water is but a memory. The hot water regulator is, furthermore, developed to take care of the extremely difficult regulating cases which occur when users have relatively small domestic hot water requirements and have small, quick heat exchangers, and where one normally has no hot water circulation. The valve also provides good comfort and an essential improvement to the well-known difficult-to-control and characteristic "on-off" regulating, which is typical for small plants. The valve is based on the fact that as soon as a hot water flow takes place then a proportionately correct district heating flow is always released through the water heater. When the flow changes, an appropriate correlation of the district heating flow immediately takes place in order to maintain the correct hot water temperature. When drawing-off stops, the district heating valve closes immediately and avoids, i.a. the lime depositing phenomenon on the valve surfaces which is caused by over tempering, due to the primary valve not closing quickly enough when the secondary flow, and therewith the cooling, stops.

It is important in this context to stress that the hot water regulator according to preferred embodiments are simple and robust and especially adapted to integrate in an intelligent connection block and are for the own-media self-acting valve type, and do not, therefor, need any auxiliary energy. The valve is based on hydraulic generation, conversion and transferring of actuating forces and manoeuvres via communicating hydraulic pistons, preferably filled with oil, which join together by thin pipes. If some damping of the action of the regulator is desired a reduction may be put into said thin pipes.

According to a preferred embodiment, the monitoring means include also at least one simple, functionally reliable flow transducer having a limited and low pressure drop and having a distinct start flow and great accuracy over a large effective range. In this area of technology, to monitor the thermal process in a heat exchanger, it is thus important that it covers all expected flows from essentially no flow to the maximum expected flow and by simple means combine with, and be able to function with precision with an energy-meter taking intermittent readings of the flow.

A flow transducer for recognising the flow of a flowing fluid in a closed channel, comprises according to one aspect of the invention, a measuring piston arranged in the channel. The measuring piston, which according to one embodiment, on flow fluctuation moves axially in the channel or slider tube, and comprises in itself, holes and/or slots, a gap between the slider tube piston and a predetermined distance between holes/slits arranged at the bottom of the measuring piston and the slider tube's lower edge when the measuring piston is unloaded. Alternatively, the measuring piston is arranged in a slider tube, which has holes and/or slots with a configuration which corresponds. The sensor piston is provided with its own built in opposing force which maintains the desired differential pressure from the sensor via a spring construction, where the spring constant is reflected in the characteristic of the layout of the holes or slots over the slider tube. Said design of the flow transducer provides a large effective range in three distinctive "threshold stages" from zero to maximum flow; in the first stage the piston is displaced in the pipe from a starting point, zero position, up to a position where liquid can just directly start to run out through the holes or the slots. At this stage the liquid only passes through the gap between piston and slider tube. Concurrent with the displacement of the piston, the flow is allowed to gradually increase in that the length of the gap is shortened and the relative pressure fall thereby is reduced. This means safeguarding that the meter does not fluctuate between no-flow and minimum-flow at its starting zone, which is a necessary property in a combined intermittent periodic and monitoring energy meter for obtaining precision even at the extremely small flow loads when the system may be exposed to hydraulic oscillation, so-called "swing", typical for a district heating system. In stage two, further piston displacement takes place in the slider tube from the start of the holes or slots to their end. This is the transducer's real measuring range and is adapted for the main working area. In stage three further piston displacement takes place in the slider tube past the end of the holes or slots to the stop of the spindle, whereby the fall in pressure gradually increases. The pressure loss in the primary flow that occurs above the piston varies with the opening degree of the piston in a predetermined relation to the opposing force of the spring arrangement. The pressure fall is selected within a constant range as low and as long as possible, for instance approximately 0.2 bar, so that within real working range of the transducer no troublesome pressure drop occurs in the district heating circuit assembly.

One method of obtaining a usable value from the reader piston is, for example, via inductive position monitoring of the spindle top's position generate an electric signal. The sensor's upper part may also be arranged with a transparent material and be provided with an analogue scale whereby the instantaneous flow may be immediately read by service technicians on the site by checking the position of the top of the spindle in relation to the scale.

### DRAWINGS

The invention shall be described more in detail in the following and exemplified by preferred embodiments with reference being made to attached drawings.

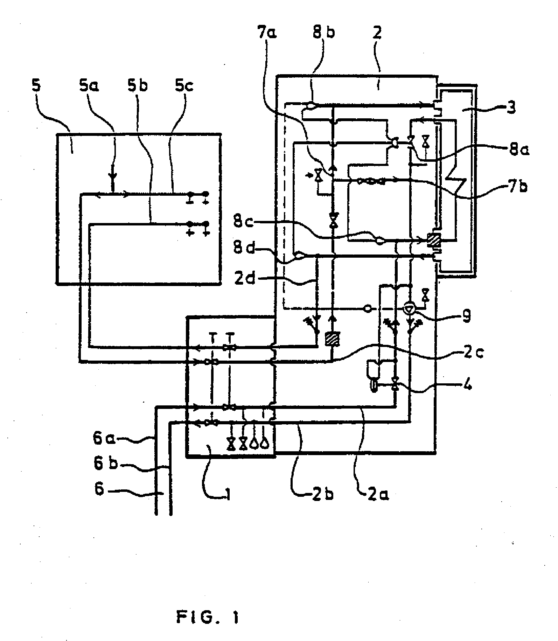

Figure 1 illustrates a circuit diagram of the principle of a heat transferring device according to an embodiment of the invention, comprising a heat exchanger, preferably a water heater.

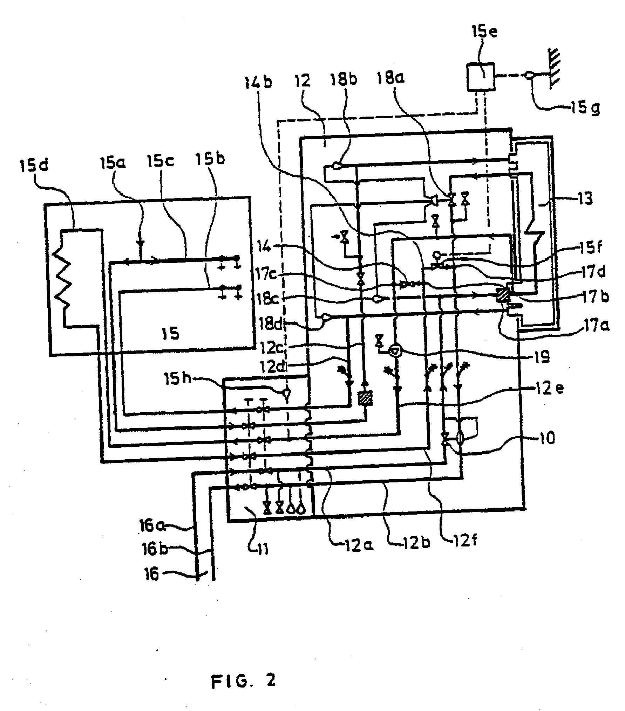

Figure 2 illustrates a circuit diagram of the principle of a heat-transferring device according to an alternative embodiment of the invention, comprising a heat exchanger and a shunt circuit.

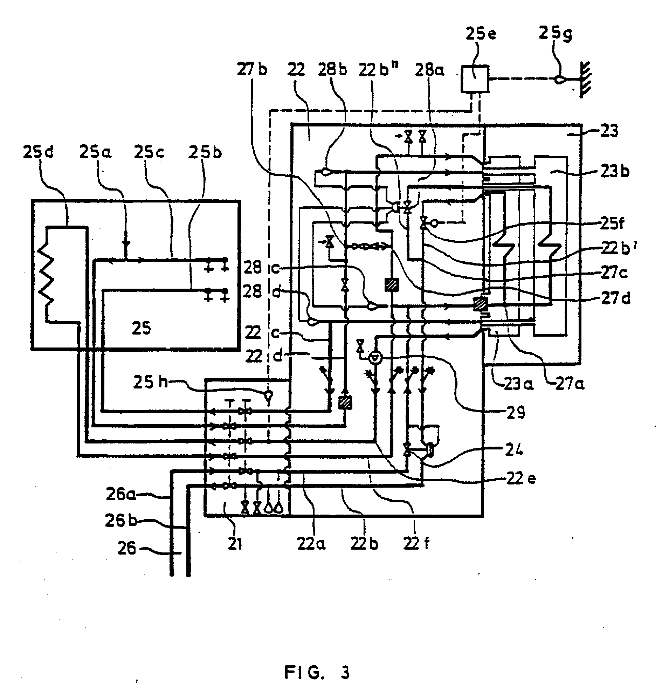

Figure 3 illustrates a circuit diagram of the principle of a heat-transferring device according to a preferred embodiment comprising a heat exchanger.

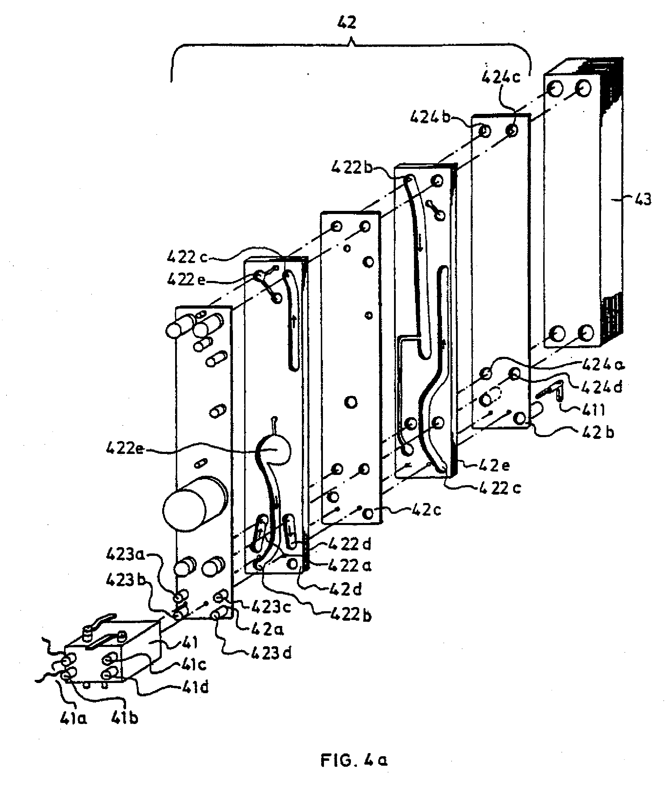

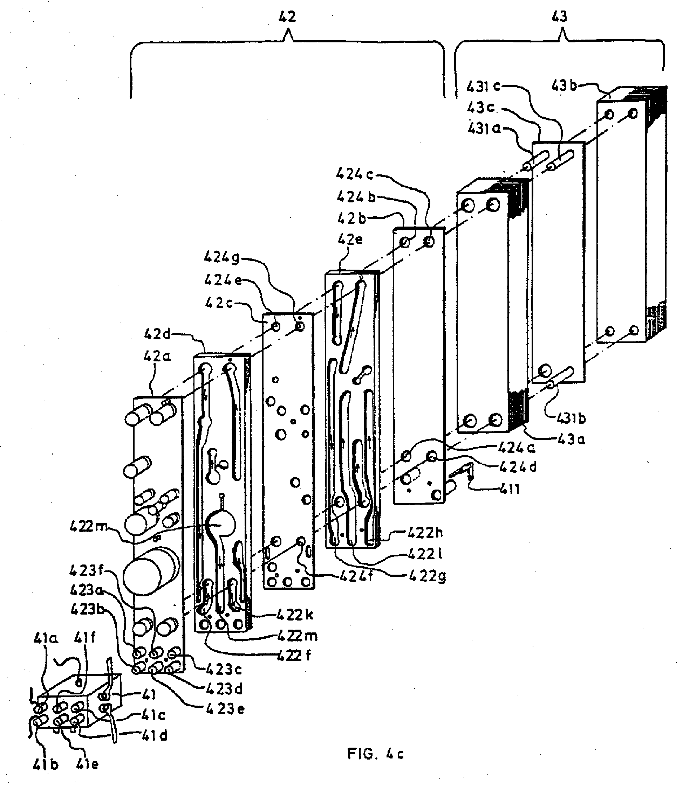

Figure 4a illustrates a heat transferring device comprising a coupling means, two end pieces, a number of sheet formed channel plates with recesses which are arranged to be assembled into one intelligent connection block having inner channel systems for connection of the heat transferring device according to one embodiment of the invention, comprising a heat exchanger in the form of a water boiler.

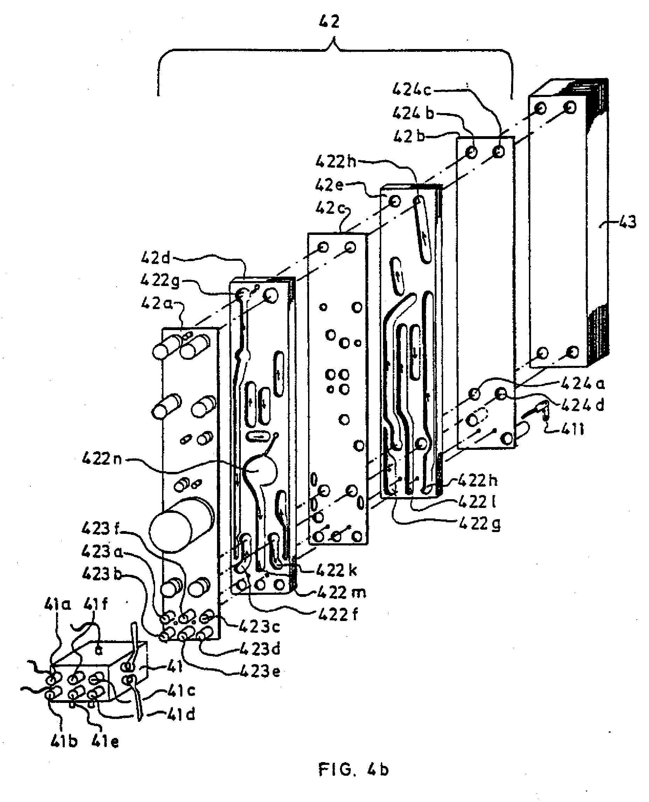

Figure 4b illustrates a heat-transferring device comprising an end fitting, two end pieces, a number of sheet formed channel plates with recesses, which are arranged to be assembled into one intelligent connection block having inner channel systems for connecting the heat-transferring device according to one embodiment of the invention, comprising a heat exchanger and a shunt circuit.

Figure 4c illustrates a heat-transferring device comprising a coupling means, two end pieces, a number of sheet formed channel plates with recesses, which are arranged to be assembled into one intelligent connection block having inner channel systems for connecting the heat-transferring device according to one embodiment of the invention, comprising two heat exchangers.

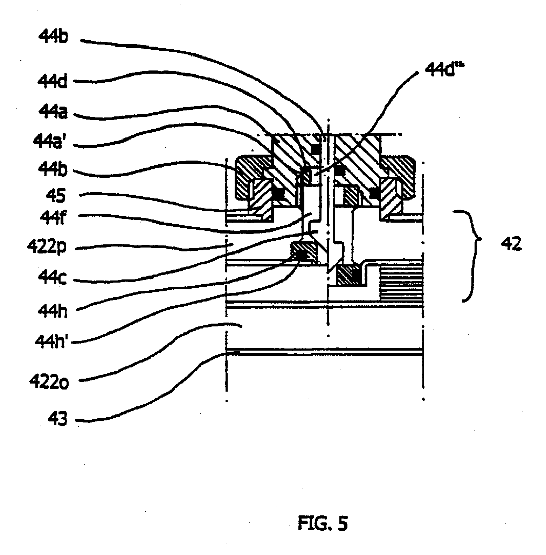

Figure 5 illustrates an adapted application of a control valve for surface mounting on an intelligent connection block according to any embodiment of the invention.

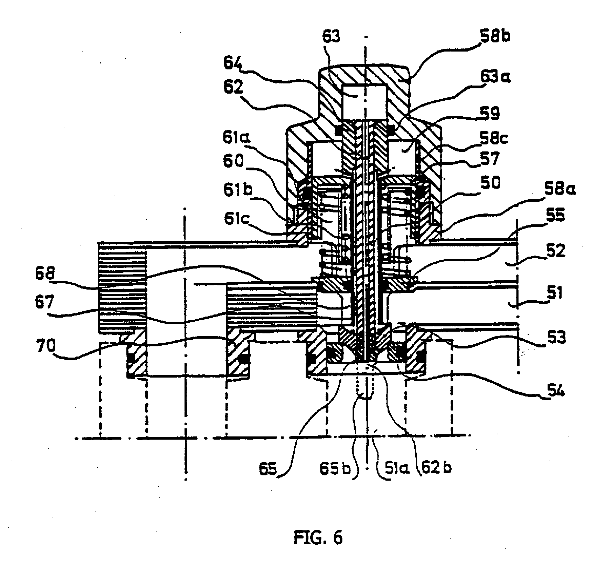

Figure 6 illustrates a differential pressure regulator intended to be integrated in an intelligent connection block for a heat-transferring device according to any embodiment of the invention.

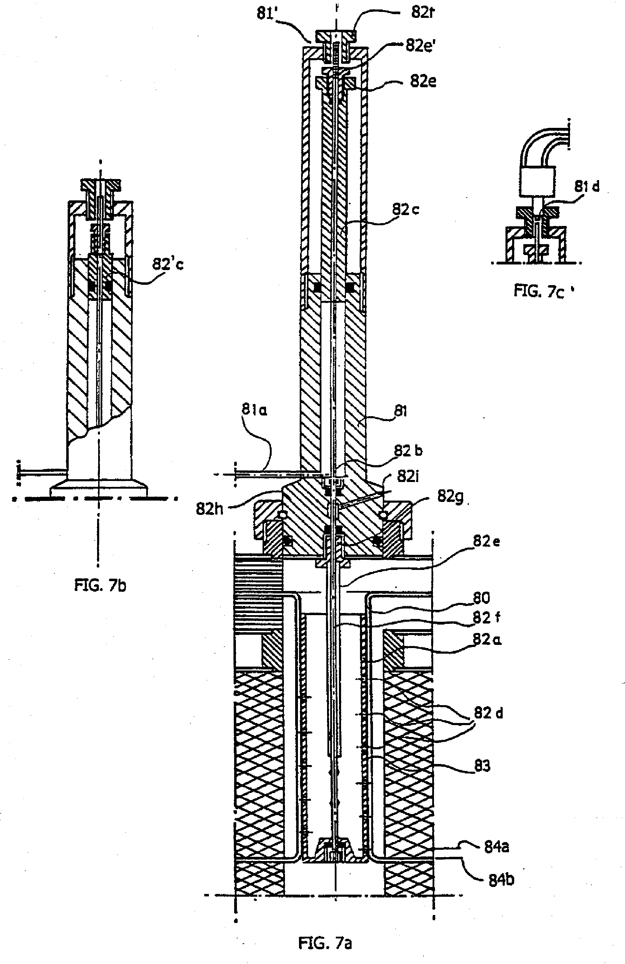

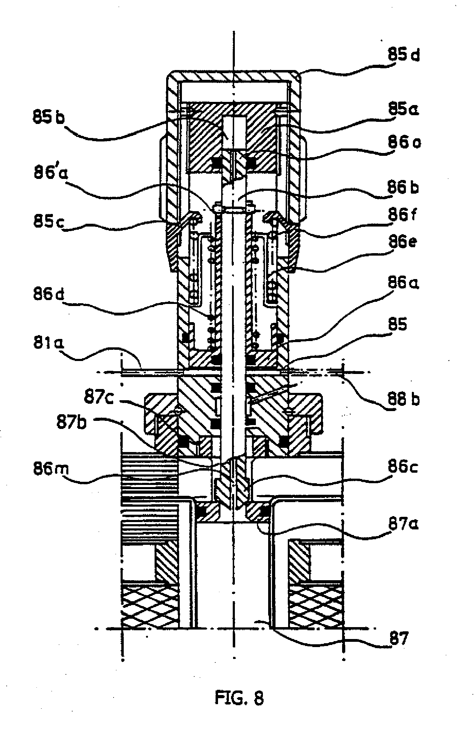

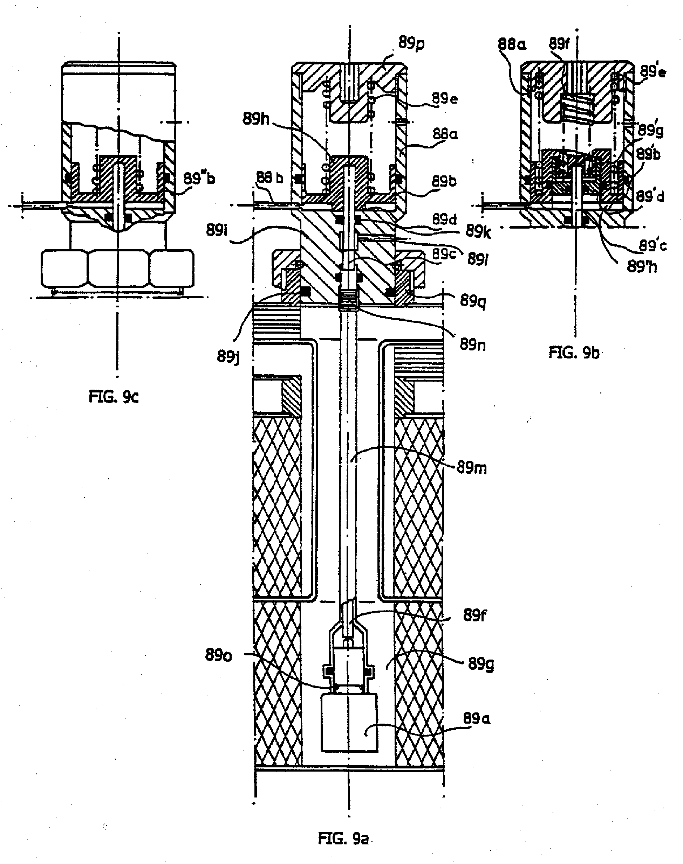

Figure 7a illustrates a flow transducer according to one embodiment of the present invention and suitable to be integrated in the intelligent connection block in combination with a valve according to Figure 8 or 9 being included in a control valve for domestic hot water included in the heat-transferring device according to the present invention.

Figure 7b illustrates in detail the upper part of the flow transducer's main cylinder according to Figure 7a in a variant having a piston with shorter length in axial direction and alternative sealing between the piston and cylinder.

Figure 7c illustrates in detail the upper part of the flow transducer's main cylinder according to Figure 7a in a variant comprising an electric actuator in the upper end position.

Figure 8 illustrates a valve suitable to be integrated in the intelligent connection block to regulate the flow in a channel in a heat-transferring device according to one embodiment of the present invention associated with a flow transducer for controlling the domestic hot water preparation according to any of the variations in Figures 7a-7c.

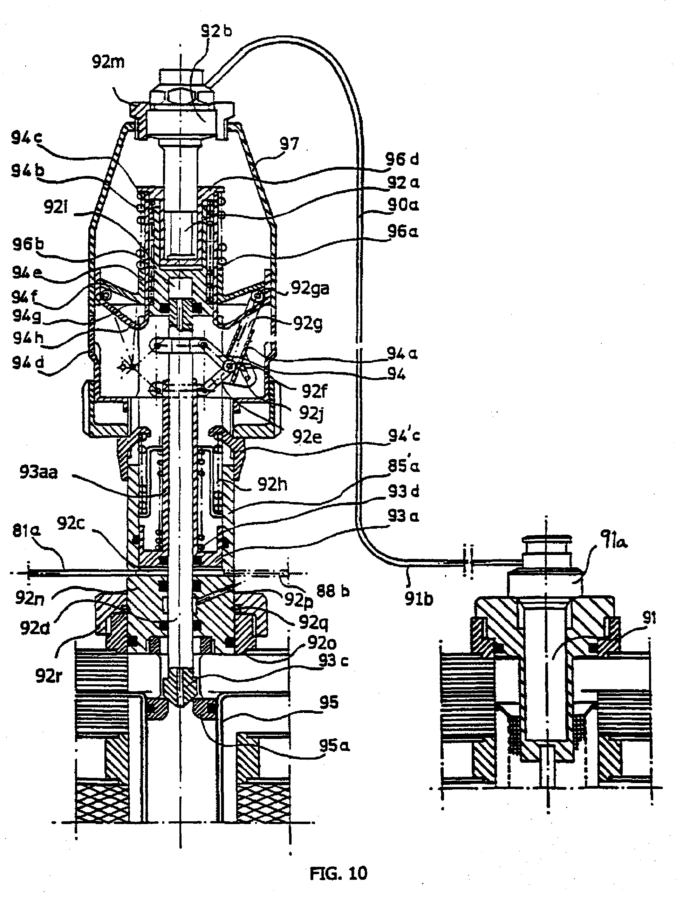

Figure 9a illustrates a complete compensating unit of scalding guard type, suitable to be integrated in an intelligent connection block and associated with a flow transducer according to Figures 7a-7c and a valve according to Figure 8 or 10, included in a control valve to regulate domestic hot water in a heat-transferring device according to the present invention.

Figure 9b illustrates an alternative compensating unit, of the type which in addition to the scalding guard also provides a basic heat maintaining function for the water heater and thus an indirect maintaining of heat of the incoming primary fluid via a circulation channelling effect, suitable to be associated with a flow transducer according to Figures 7a-7c and a controlled valve according to Figure 8 to be included in a control valve to regulate domestic hot water in a heat-transferring device according to the invention.

Figure 9c illustrates the upper part of a compensating unit according to Figure 9a, in an alternative embodiment, which in addition to scalding guard, provides a heat maintaining function at a temperature level which is the same as for the scalding guard, suitable to be associated with a flow transducer according to Figures 7a-7c and a controlled valve according to Figure 8 to be included in a control valve to regulate domestic hot water in a heat-transferring device according to the invention.

Figure 10 illustrates a controlled valve comprising in part an integral compensating element of the type providing adjustment of the temperature of the incoming primary fluid and via circulation channelling, a direct heat maintaining function for incoming primary fluid, suitable to be associated with a flow transducer according to any of the variations in Figures 7a-7c and optionally scalding guard according to Figure 9a to be included in a system of sensors and actuators to regulate the domestic hot water in a heat-transferring device according to the present invention.

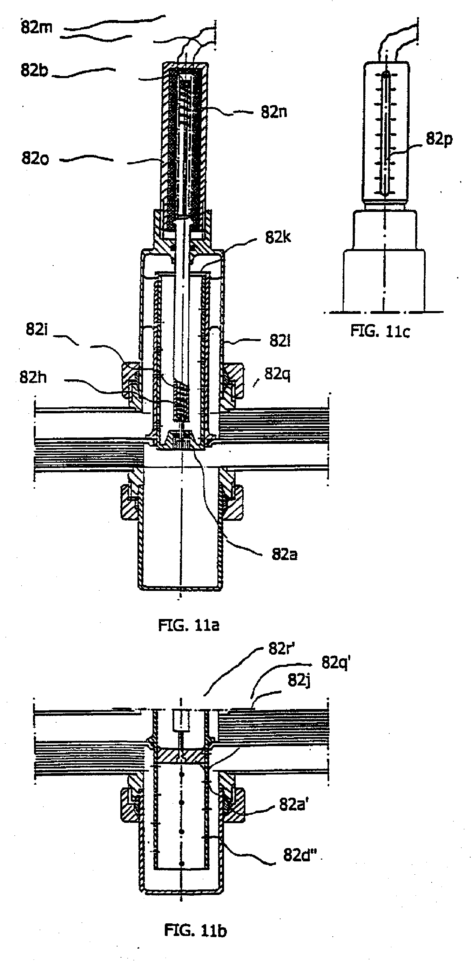

Figure 11a illustrates a flow transducer for electrical signalling, comprising a hollow measuring piston and a built in spring arrangement at the end of the measuring piston and integrally assembled in an intelligent connection block suitable to be included in an energy meter.

Figure 11 b illustrates in detail the measuring piston and flow channel in an alternative embodiment of the flow transducer according to Figure 11 a, comprising a slider tube with holes.

Figure 11 c illustrates in detail a view of the upper part of the flow transducer according to Figure 11 a or 11 b with a window for visual read out of the instantaneous flow.

### DESCRIPTION OF THE DRAWINGS

The descriptions of preferred embodiments are mainly directed to the use of a heat-transferring device according to the present invention as central heating in a smaller building. However, the use is not limited to this and a number of suitable applications will appear to be just as interesting and obvious to a man skilled in the art, based on the description in its entirety and on the following description of preferred embodiments in particular. In the schematic Figures 1-3, as far as is possible, adopted or generally accepted symbols in the field have been used for the components included. For this reason and so as not to unnecessarily burden the figures and the description of the figures, and thus possibly make the description of the invention unclear, not all the components shown have been given reference numbers.

Figure 1 is a schematic circuit diagram comprising a coupling block 1, a heat exchanger 3, an intelligent connection block 2, a consumer 5, for instance a domestic hot water system and an external hot water source 6, such as a hot water boiler. The heat exchanger 3 in Figure 1 is, for example, a water heater 3, supplied with cold water which is heated with the hot water from the boiler 6, which passes through the heat exchanger 3 in opposite direction to the cold water. The heat exchanger comprises inlets for the cold water and outlets for the heated domestic hot water as well as inlets for incoming hot water and outlets for the return of the hot water. The intelligent connection block 2 comprises main connections for inflow and outflow of the two fluids out of the device from and/or to the boiler, domestic hot water system, respectively, sub-connections for joining to the heat exchanger's 3 inlets and outlets, and inner channels 2a, 2b, 2c, 2d which connect a main connection to the corresponding sub-connection, which is described in the following. In certain embodiments it is advantageous to co-ordinate all the main connections to connect to a coupling block 1 on one of the large surfaces of the intelligent connection block 2. Dependent upon outer connecting systems such a coupling block may be arranged on the side of the large surface turned away from the heat exchanger, such as is illustrated in Figure 1, or on the opposite large surface. It is even advantageous to arrange the coupling block 1 with connecting valves and to co-ordinate opening and closing of two or several of said valves. Furthermore, from the point of view of production and flexibility it is advantageous to use an intelligent connection block according to the embodiment of the invention illustrated in Figure 4a. Said embodiment comprises a number of channel plates piled and joined to each other, two end pieces and an intermediate sheet, where the channel plates have recesses or by means of intermediate walls achieve separations, which in the assembled connection block interact and form the inner channels and other inner cavities when required. In many cases it is preferred, in order to acquire great flexibility in the hydraulic production's adaptation and optimum rational production, that one or several of the channel plates are, in their turn, built up of a plurality of thin sheet formed elements which are joined together. Preferably soldering is used to join together the channel plates, the end pieces, the intermediate sheets and/or the sheet formed elements.

The cold water enters the heat transferring device by means of a first main connection and is lead to the hot water heater's 3 inlets via a first inner channel 2c arranged in the block 2 and a first sub-connection to the inlet for domestic water of the water heater's 3 secondary fluid, and into and through the water heater 3, where it is heated by boiler hot water which passes the water heater 3 in counter flow to the domestic water. The heated domestic water, the domestic hot tapwater, leaves the water heater 3 and is lead into the connection block 2, and then via a second inner channel 2d, to a second main connection, which connects to a system 5b having one or several drawing off sites for domestic hot water. The first inner channel 2c for supplying cold water to the water heater 3 has also a flow distribution means, in Figure 1 illustrated as a branch pipe 7a.

Said branch pipe 7a makes it possible to refill water to the external primary fluid circuit 6, which in the embodiment according to Figure 1 consists of a hot water circuit 6, such as, for example, a boiler water circuit. Hot boiler-water 6a is supplied to the device via a third main connection and is lead via a third inner channel 2a to a third sub-connection which joins to the water heater's 3 inlet for boiler-water, primary fluid, through the water heater 3 and out to a fourth sub-connection on the connection block 2, where the boiler-water's return is lead via a fourth inner channel 2b to a fourth main connection and returns as boiler-water return 6b to the boiler. The fourth inner channel 2b for the boifer-water's return comprises a second branch pipe 7b, which is placed in communication with branch pipe 7a in the first inner channel 2c, and hereby, when required, supply new water in the form of cold water to the boiler-water's return 6b, for example for filling up an expansion vessel, not shown, joined to the circuit. The third inner channel 2a, for providing boiler hot water to the water heater, comprises a valve 8a, which regulates the flow of the boiler-water through the water heater 3 based on the flow of domestic water in the water heater 3. In Figure 1 the valve 8a is placed in channel 2b so as to regulate the outflow from the heat exchanger 3 based on the cold water inflow. This inflow is monitored by means of a flow transducer 8b arranged in the channel 2c which supplies cold water to the water heater, the flow transducer 8b being associated with the valve 8a. The flow transducer 8b may even be electrically associated with a circulation pump 9 for the boiler-water, which preferably is arranged to start at a generated signal by the flow transducer 8b at a predetermined flow and reversibly stop at different flow. The pump 9 generates its pumping force directly in or in immediately vicinity to the connection block. The valve 8a may, when required, be associated with a number of compensating units 8c, 8d. Said units compensate the control valve's opening on the basis of further variables, such as temperature of the boiler-water which is supplied to the water heater 8c, or the temperature of the domestic hot water which leaves the water heater 8d. This last mentioned compensation is often to be looked upon as a security measure to avoid injury to consumers and may, thus, when required be associated with means which can quickly cut off the boiler-water supply so as to quickly reduce the domestic hot water temperature. The third inner channel 2a can even comprise a differential pressure valve 4, for maintaining the differential pressure constant between incoming primary fluid after valve 4 and the primary fluid's return prior to the pump 9. Obviously this assembly of a heat-transferring device according to the invention may be used for other purposes requiring the production of heating and cooling media.

In Figure 1, the consumer comprises a cold water source 5a, a drawing-off system 5b for the water produced in the heat-transferring device, a drawing off system 5c for cold water.

The illustrated device in Figure 2, is for instance, a central heating unit for the production of domestic hot water 15 b and hot water for a heating system 15d intended to be used in a smaller building 15. The heating station comprises a coupling block 11, an intelligent connection block or plate 12, a heat exchanger 13 for producing hot domestic tapwater, and a shunt circuit comprising a shunt conduit 14, for producing hot water for the heating system 15d of the building. The connection block 12 comprises inner channels 12a-12f, flow distribution means 17a, 17b, flow accumulation means 17c, 17d, main connections, sub-connections and controlling means 15f, 18a, 18b, 18c, 18d, for the thermal processes. The coupling block 11 includes means for connecting the heat-transferring device according to the present invention to an external hot water source 16, for instance a district heating network, a consumer 15 having one or several circuits 15b, 15d connected to the heat transferring device, for example a heating system 15d and hot tapwater system 15b. The district heating network 16 connects to the coupling block 11 by means of an inlet for district heating hot water 16a and an outlet for district heating return 16b. The consumer is a smaller building, for example, having a cold water source 15a, a tap circuit having one or several drawing-off sites for hot water 15b, a tap circuit having one or several drawing-off sites for cold water 15c and a heating system 15d. The hot water system 15d may be associated with a control unit 15e and a sensor 15g for reading the outdoor temperature and a sensor 15 h for reading the temperature of the water supplied to the hot water system 15d. The sensors 15g, 15h and the control unit 15c can be associated with the heat transferring device to control the production of hot water in the heating system, for instance control the control unit 15e introduction of new primary hot water in the heating system 15d. This introduction of water is directly controlled by a valve 15f which influences the return from the heating system to the district heating return, The control unit 15e may also be associated with sensors for reading the temperature inside the building.

The heat exchanger 13, for example, is arranged to produce hot tapwater and supplies cold water that heats together with hot water, for instance district heating water, which passes through the heat exchanger in counter flow to the cold water. The heat exchanger 13 comprises inlets for cold water and outlets for hot tapwater as well as inlets for incoming district heating water 16a and outlets 16b for return of district heating.

The intelligent connection block 12 comprises
- main connections for incoming district heating, district heating return, incoming cold water, domestic hot water, incoming return from the heating system and outgoing heated water to the heating system.
- sub-connections for connecting the inlets and outlets of the heat exchanger and for connecting to the shunt circuit.
- inner channels 12a, 12b, 12c, 12d, 12e, 12f, joining a main connection to corresponding sub-connection, which will be described more in detail in the following,
- flow distribution means 17a for dispersing incoming hot district heating water 12a between the heat exchanger 13 and the shunt circuit, flow distribution means 17b for dispersing the return 12f of the heating system between the shunt conduit 14 and the channel 12b for the return of the district heating water, flow accumulation means 17d for accumulating return from the heat exchanger 13 and the shunt circuit, flow accumulation means 17c for, via the shunt circuit, bringing together by means of channel 12a incoming district heating water and return from the heating system 15d via the shunt conduit 14,
- controlling means 15f, 18a,18b,18c,18d for controlling and monitoring the thermal processes,
- means for cleaning, pressure control, pressure release system, flow direction control, temperature monitoring etc.,
- circulation pump 19 for the return from the heating system,
- differential pressure valve 10 for maintaining the constant of the pressure difference between the inlet 12a of the district heating water subsequent to the valve 10 and district heating return 12b.

Furthermore, in certain embodiments it is advantageous to co-ordinate all the main connections connected to a coupling block 11 on one of the large surfaces of the intelligent connection block. Depending upon externally connected systems, such a coupling block 11 may be arranged on the large surface turned away from the heat exchanger 13 or on the opposite corresponding large surface. It is also advantageous to arrange the coupling block with connection valves for the inlets and outlets of the external circuits, to and from, respectively, the heat transferring device and to co-ordinate opening and closing of two or more of these valves. Furthermore, from the viewpoint of production and flexibility, it is advantageous, according to the embodiment of the invention shown in Fig 4b, to use an intelligent connection block that includes end pieces, intermediate plates and a plurality of connected channel plates piled on each other, where the channel plates have recesses, or by means of the intermediate walls form separations, which in the composite connection block co-operate and form the inner channels and other inner cavities, as required. In many cases in order to achieve great flexibility for the adaptation of hydraulic production and optimum rational production, it is preferred that one or several channel plates, in their turn, are built up of a plurality of thin plate-formed elements which are bonded together. Soldering is preferably used to bond the channel plates, the end pieces, the intermediate plates and/or the plate-formed elements.

Incoming district heating water, which typical for the application of the device has essentially a constant temperature of about 65° C , is supplied to the device by means of an inlet 16a via the coupling block 11 to a first main connection arranged on the intelligent connection block 12, and is lead along by means of an inner channel 12a, in which it is dispersed at a distribution point 17a, between the heat exchanger 13 for the production of hot tapwater to the domestic hot tap water circuit 15b and the shunted return of heating water 12e, 12ff, the shunt conduit 14 and the heating system 15d. The distribution point 17a, as has been indicated in Figure 2, may be a channel branch in which a channel for supplying district heating to the shunt circuit is joined to the channel. The channel branching may also be carried out as a starting point for two pipes, one arranged in the other, where one of the channels is formed by the outer cavity between the pipe walls, and the second channel by the inner pipe's interior. The channel 12a connects to the counter flow branching 17a to the sub-connection for incoming district heating water to the heat exchanger 13 and the channel 12e connects to the shunt circuit with shunt conduit 14 and the heating system 15d associated therewith.

Some of the district heating water leaves the intelligent connection block 12 and is subsequently lead to the heat exchanger's 13 inlet for incoming district heating water through the heat exchanger 13 in counter flow to the heated hot tapwater in the heat exchanger 13. The district heating water leaves the heat exchanger 13 by an outlet connecting to the sub-connection of the intelligent connection block 12 and along channel 12b, where at the distribution point 17d, mixes with the return water from the heating circuit 15d and the shunt circuit via channel 12f and channel 14b, prior to leaving the connection block 12 and device through the main connection for the district heating return 16b.

Another part of the district heating water continues to the intelligent connection block 12 and is lead to the shunt circuit, which is associated with the heating system and comprises a shunt conduit 14 having a check valve and a distribution point 17a and an accumulation point 17c. The shunt conduit 14 is arranged to supply return from the heating system 15d to the district heating water at the accumulation point 17c before the mixed water is supplied to the heating system 15d. The heating system's return water supplied by the shunt conduit 14 is taken from distribution point 17b, in counter flow to the heating system 15d, and has a lower temperature than incoming district heating water, whereby the temperature of the water supplied to the heating system may be regulated. The district heating water leaves the shunt circuit in the intelligent connection block 12 via the channel 14b and control means 15f and continues in channel 12b. There, at the accumulation point 17d, it is mixed with the district heating return from the heat exchanger 13, before it leaves the intelligent connection block 12 and the device through the main connection for district heating return water 16b.

The inner channel 12a may be arranged with a differential pressure valve 10, according to Figure 6, for maintaining the constant of the pressure difference between incoming district heating water in channel 12a after the valve 10 and the district heating return in channel 12b at valve 10.

The inner channel 12b comprises a controlled valve 18a, preferably of the type described more in detail with reference to Figures 8 and 10. The valve 18a, positioned in channel 12b for district heating return water from the heat exchanger 13, controls the flow of the district heating water through the heat exchanger 13 on the basis of the flow of the incoming tap water in the channel 12c, which is monitored by means of control valve 18a associated with flow transducer 18b. When required the setting of the valve 18a is adjusted to influence the incoming district heating flow by means of compensating units 18c, 18d. These units sense the temperature of the incoming district heating water in channel 12a and the temperature of the outgoing domestic hot water in channel 12d, respectively, by means of temperature sensors 18c, 18d arranged in said channels, which are associated with the valve 18a.

Obviously a similar valve or a conventional valve 15f can be arranged for the shunt circuit to control the outlet of the district heating water in said circuit.

Cold water for the production of domestic hot water is supplied to the heating station by means of a main connection on the intelligent connection block 12 and is then lead through an inner channel 12c, in which the flow transducer 18b is arranged, to the inlet for cold water of the heat exchanger 13. The water is then heated during the passage through the heat exchanger 13 of the counter flowing district heating water. The heated domestic hot water leaves the heat exchanger 13, is supplied to the intelligent connection block 12 and is lead through channel 12d to the main connection, which joins to a system 15d comprising at least one drawing off site for domestic hot water. When required, a temperature sensor 18d is arranged in channel 12d for sensoring the temperature of the domestic hot water and when the temperature is too high, influence the outflow of the district heating water out of the heat exchanger and thereby the thermal process in the heat exchanger 13, by means of the control valve 18a. Scalding protection is obtained by such a method.

Return water from the building's heating system 15d is supplied through a main connection arranged on the intelligent connection block 12 and is then lead through an inner channel 12e further into the shunt circuit previously described comprising a shunt conduit 14, channel 14b, control valve 15f and the heating system 15d. The water tempered by the shunt for the heating system 15d, in counter current to the shunt circuit, is supplied thereafter to the intelligent connection block 12 and via a channel 12a to the main connection, from where it is lead out into the heating system 15d to the circulation pump 19, which generates its pumping effect directly in or adjacent to the intelligent connection block 12.

Figure 3 illustrates a preferred embodiment of a heating station for the production of domestic hot water to a drawing off circuit 25b and hot water for a heating system 25d intended for use in a smaller building, comprising a composite heat exchanger for simultaneous production of domestic hot water and hot water for heating. The heating station comprises a coupling block 21, an intelligent connection block or plate 22, in-built heat exchanger having a first heat exchanger 23a, arranged for the production of hot water for the heating system 25d for the building and a second heat exchanger 23b for producing domestic hot water 25b. The intelligent connection block 22 comprises inner channels 22a-22f, flow distributing means 27a, 27b, flow accumulating means 27c, 27d, main connections, sub-connections and controlling means 25f, 28a, 28b, 28c, 28d for the thermal processes. The coupling block 21 comprises means for connecting the heat transferring device according to the present invention to an external hot water source 26, for example, to a district heating network, a consumer 25 with one or several circuits 25b, 25d connected to the heat transferring device, such as a heating system 25d and a domestic hot water system 25b. The district heating network 26 connects to the coupling block 21 by means of an inlet 26a for the district heating hot water and an outlet 26b for the district heating return water. The consumer is, for example, a smaller building 25 having a cold water source 25a, a drawing off circuit with one or several drawing off sites for hot water 25b, a drawing off circuit with one or several drawing off sites for cold water 25c, a heating system 25d. The heating system 25d may be associated with a control unit 25e having a sensor 25g for monitoring the outside temperature and a sensor 25h for monitoring the temperature of the water supplied to the heating system 25d, which may be associated with the heat transferring device controlling the tempering of the hot water in the heating system, for example control the control unit's 25e inflow of district heating water to the heat exchanger 23a for the heating system 25d. This inflow is indirectly controlled by a valve 25f, which influences the district heating return water from the heat exchanger 23a. The control unit 25e may also be associated with sensors for monitoring the temperature inside the building.

Both plate heat exchangers 23a, 23b of the heat exchanger have inlets and outlets arranged on the end piece which is arranged against the intelligent connection block 22. The first heat exchanger 23a lies, thus, against the second heat exchanger 23b in such a manner that the first heat exchanger 23a is positioned with its outer end piece against the connecting end piece of the second heat exchanger 23b. The first heat exchanger 23a has a through channel arranged inside the inlets, outlets, respectively, in which the second heat exchanger 23b comprises inlets and outlets, of which at least three are arranged with extending attachments, which are inserted into or go through the through going channel of the first heat exchanger 23a. The through going channels and the attachments are preferably arranged to make up integral parts of the heat exchanger's inlets and outlets. The inlets and outlets of the plate heat exchanger 23a, 23b are preferably arranged in such a manner so that;
- the channel for the district heating water inlet in the second heat exchanger 23b is joined together or arranged inside the inlet of the first heat exchanger 23a,
- the channel for the district heating water outlet from the second heat exchanger 23b is arranged inside the outlet of the first heat exchanger 23a,
- the channel for the cold water inlet in the second heat exchanger 23b is arranged inside the inlet of the first heat exchangers 23a for the heating system, and
- the channel for the domestic hot water outlet from the second heat exchanger 23b is arranged inside the outlet for the heating system of the first heat exchanger 23a.

The intelligent connection block 22 comprises;
- main connections for incoming district heating, district heating return, incoming cold water, domestic hot water, incoming return from the heating system and outgoing heated water to the heating system,
- sub-connections for connecting to the inlets and outlets of the heat exchanger and for connecting to the shunt circuit,
- inner channels 22a, 22b, 22b', 22b", 22c, 22d,22e,22f, joining a main connection to the corresponding sub-connection, which is described more in detail in the following,
- flow distribution means 27a to disperse incoming district heating water 22a between the plate heat exchangers 23a and 23b, flow distribution means 27b for dispersing cold water to the hot water system 25d for refilling, flow accumulation means 27c to accumulate return 22b' and 22b" from the heat exchangers 23a and 23b and flow accumulation means 27d to mix together cold water and water from the heating system for refilling the heating system 25d and its expansion vessel, not shown,
- controlling means 25f,28a,28b,28c,28d for controlling and monitoring the thermal processes
- means for cleaning, pressure control, pressure release, flow direction control, temperature monitoring etc.
- circulation pump 29 for the water of the heating system 25d
- differential pressure valve 24 for maintaining the pressure difference constant between the inlet 22a of the district heating water after the valve 24 and return 22b.

As with the heating station in Figure 2, it is in certain embodiments of the heating station illustrated in Figure 3 advantageous to co-ordinate all the main connections in the intelligent connection block to couple with the coupling block 21 on one of the large surfaces of the intelligent connection block 22. Dependent upon external connecting circuits 25a,25b, 25d, 26 such a coupling block may be arranged on the large surface turned towards the heat exchanger or on the opposite corresponding large surface. It is also advantageous to arrange the coupling block with connecting valves and to co-ordinate opening and closing of two or several of these valves. Furthermore, from the viewpoint of production and flexibility, it is advantageous, according to the embodiment of the invention shown in Fig 4c, to use an intelligent connection block 22 that includes a plurality of connected channel plates piled on each other, two end pieces and one or several intermediate sheets, where the channel plates have recesses, or by means of the intermediate walls form separations, which in the composite connection block co-operate and form the inner channels and other inner cavities, as required. In many cases in order to achieve great flexibility for the adaptation of hydraulic production and optimum rational production, it is preferred that one or several channel plates, in their turn, are built up of a plurality of thin plate-formed elements which are bonded together. Soldering is preferably used to bond the channel plates, the end pieces, the intermediate plates and/or the plate-formed elements to the intelligent connection block.

Incoming district heating water is lead via a district heating inlet 26a and supplied to the device via a connection plate to a first main connection arranged on the intelligent connection block 22 and is lead along by means of an inner channel 22a in which it is dispersed, at the distribution point 27a, between a first heat exchanger 23a for producing hot water for the building's heating system 25d and a second heat exchanger 23b for producing domestic hot water to the building's hot tapwater system 25b. The distribution point 27a may be a channel branch or, as illustrated in the Figures, consist of a common inlet channel for both plate heat exchangers 23a and 23b for supplying district heating water to the plate heat exchangers 23a, 23b. ln the illustrated embodiment, the distribution point 27a in practice consists of a plurality of separate distribution points extending through the entire inlet channel of the plate heat exchanger 23a, which in number equal the number of plate channels for the district heating in the plate heat exchanger 23a.

Thus, the district heating water exits from the intelligent connection block 22 and is lead via sub-connections and the common inlet channel for the heat exchanger previously described, wherein some is distributed to the inlet of the heat exchanger 23a arranged for incoming district heating water, for producing hot water to the heating system 25d and is lead through the heat exchanger 23a in counter flow to the heated hot water in the heat exchanger 23a for the heating system 25d. The district heating water leaves the heat exchanger 23a in the outlet connected to the sub-connection of the intelligent connection block 22 and then into channel 22b' where, at the accumulation point 27c, it is mixed with the return from the second plate heat exchanger 23b arranged for producing domestic hot water, before leaving the intelligent connection block 22 and the device through the main connection for district heating return 26b.

Another part of the district heating water which exits the intelligent connection block 22 is lead to the plate heat exchanger 23b for producing the domestic hot water to the hot tapwater circuit 26b. The district heating water is lead in counter flow towards the tapwater through the plate heat exchanger 23b and exits the plate heat exchanger 23b and is returned to the intelligent connection block 22 and along through the channel 22" to the accumulation point 27c, where it is mixed with the return from the heat exchanger 23a, before it leaves the intelligent connection block 22 and the heating station through the main connections for the district heating return 26b.

The inner channel 22a preferably comprises a differential pressure valve 24, according to Figure 6, for maintaining the pressure difference constant between incoming district heating water in the inlet channel 22a after the valve 24 and the return in the outlet channel 22b at valve 24.

The inner channel 22b" comprises a valve 28a, preferably of the type described more detailed with reference to Figures 7 and 7 and Figure 7 or 9 and 10. The valve 28a, which is arranged in the channel 22b" for return from the hot tapwater heat exchanger 23b controls the flow of district heating water through the heat exchanger 23b based on the flow of incoming tap water in the channel 22d, which is monitored by means of a flow transducer 28b associated with the valve 28a. When required, the setting of the valve 28a is adjusted to influence the flow of incoming district heating water by means of compensating units 28c, 28d, which monitor the temperature of the incoming district heating water in channel 22a and the temperature of the outgoing hot tap water, respectively, in channel 22c, by means of sensors 28c,28d arranged in these channels which are in unison with the control valve 28a. Obviously a similar valve or a conventional valve 25f may be arranged to control the process in the second heat exchanger 23a.

Cold water for producing domestic hot water is supplied to the heating station through a main connection arranged on the intelligent connection block 22 and then lead through an inner channel 22d, in which the flow transducer 28b is arranged, to the inlet for cold water of the heat exchanger 23b for domestic hot water. The water is then heated during the passing through the heat exchanger 23b of the counter flowing district heating water. The heated domestic hot water exits the heat exchanger 23b at the outlet and is supplied to the intelligent connection block 22 and lead through channel 22c to the main connection, which joins to a system 25b comprising at least one drawing-off site for domestic hot water. When required the temperature sensors 28d may be arranged in channel 22c for monitoring the temperature of the domestic hot water and at high temperatures influence the district heating water's inflow into the heat exchanger 23b by influencing the valve 28a. A scalding guard is thus obtained.

Return water from the building's heating system 25d is supplied to the heating station through a main connection arranged on the intelligent connection block 22 and is then lead through an inner channel 22f to and further into the first heat exchanger 23a of the previously described heat exchanger. The tempered water for the heating system 25d in the heat exchanger 23a is supplied again to the intelligent connection block 22 through a sub connection and lead further into the block 22 to the circulation pump 29 of the heating system circuit, which generates its pumping effect directly in or adjacent to the intelligent connection block 22 and continues via channel 22e to the main connection, from where it is lead out of the heating system 25d.

Figures 4a, 4b and 4c, illustrate a partly disassembled heat transferring device according to preferred embodiments of the invention corresponding to the Figures 1-3 illustrated in a schematic manner. The devices, which are very compact, comprise heat exchangers 43, 43a, 43b, intelligent connection block 42 and coupling block 41. The heat exchanger 43 or the heat exchangers 43a, 43b are so-called plate heat exchangers, which have all their inlets and outlets arranged on the same large surface, end piece.

The heat transferring device according to Figure 4a is preferably intended to be used as water heater and comprises a coupling block, an intelligent connection block 42 with two end pieces 42a, 42b, an intermediate plate 42c and a plurality of thinner plate formed channel plates 42d, 42e bonded together and a plate heat exchanger 43. The end pieces, the intermediate plate and the channel plates 42a-42e have holes and recesses i. a. 422a-422e, which when the end pieces, the intermediate plate and the channel plates 42a-42e are assembled together into an intelligent connection block 42, form inner channels for:
- incoming primary fluid 422a, preferably hot water, such as boiler hot water;
- primary fluid return 422b, boiler water return;
- incoming secondary fluid 422c, preferably cold water; and
- outgoing secondary fluid 422d, domestic hot water; as well as other inner cavities i. a. 422e, suitable to contain integral functional equipment in or on the intelligent connection block such as thermometers, control valves, filters, sensors, pumps, refilling-, drawing-off-, pressure release and pressure control valves, differential pressure regulator and similar components. The end pieces furthermore comprise connecting attachments 423a-423d for the four connections to the two external systems and may include connecting attachments 424a-424d for the heat exchanger. The end pieces also comprise necessary attachments for securing and assembling the aforementioned integral equipment. The composite channel block and its parts also comprise holes for insertion of a lockable fastening device 411 to the coupling block 41. In many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.

The heat transferring device according to Figure 4b is preferably intended to use as a heating station in a smaller building for the preparation of domestic hot water and hot water for a heating system to heat the premises. The heating station comprises a coupling block 41, an intelligent connection block 42 with two end pieces 42a, 42b, an intermediate plate 42c and a plurality of thinner plate formed elements bonded to channel plates 42d, 42e and a shunt circuit, comprising an external heating circuit and a shunt pipe arranged on the intelligent connection block and a plate heat exchanger 43. Channel plates 42d, 42e between the intermediate plate 42c and the end pieces 42a, 42b have holes and recesses i. a. 422f-422n, which when the end pieces 42a, 42b, the intermediate plate 42c and the channel plates 42d-42e are assembled together into an intelligent connection block, form inner channels for:
- incoming primary fluid 422f, preferably hot water, such as district heating water;
- primary fluid return 422g, district heating return;
- incoming first secondary fluid 422h, preferably cold water;
- outgoing first secondary fluid 422k, domestic hot water;
- incoming second secondary fluid 422I, preferably return water from the heating system; and
- outgoing second secondary fluid 422m, hot water to the heating system, as well as other inner cavities i. a. 422n, suitable to contain integral functional equipment in or on the intelligent connection block such as thermometers, control valves, filters, sensors, pumps, refilling-, drawing-off-, pressure release and pressure control valves, differential pressure regulator and similar components. The end pieces furthermore comprise connecting attachments 423a-423f for the six connections to the three external systems and also may include, as illustrated in the figures, connecting attachments 424a-424d for connecting to the heat exchanger. The end pieces also comprise necessary attachments for securing and assembling the integral equipment as previously described. The composite channel block and its parts also comprise holes for insertion of a lockable fastening device 411 to the coupling block 41. ln many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.

The heat transferring device according to Figure 4c is preferably intended to be used as a heating station for a smaller building for the preparation of domestic hot water and hot water for a heating system for heating the premises. The heating station comprises a coupling block 41, an intelligent connection block 42 with two end pieces 42a, 42b, an intermediate plate 42c and a plurality plate formed channel plates 42d, 42e and two plate heat exchangers 43a 43b and an intermediate end piece 43c, which alternatively is replaced by four intermediate attachments, arranged between the heat exchangers 43a, 43b. The intermediate end piece 43c, which is soldered between the plate heat exchangers 43a and 43b, is arranged with three attachments 431a,431b.431c extending through the plate heat exchanger's 43a connecting channels which connect with the corresponding connection attachments 42c of the intermediate plate. Alternatively, when the intermediate end piece 43c is replaced by intermediate attachments, the intermediate attachments 424e,424f,424g are lengthened so as to extend into the intermediate attachments.

The end pieces 42a, 42b, the intermediate plate 42c and the channel plates 42d-42e have holes and recesses i. a. 422f-422n, which when assembled together into an intelligent connection block 42, form inner channels 422f-422n for:
- incoming primary fluid 422f, preferably hot water, such as district heating water;
- primary fluid return 422g, district heating return;
- incoming first secondary fluid 422h, preferably cold water;
- outgoing first secondary fluid 422k, domestic hot water;
- incoming second secondary fluid 4221, preferably return water from the heating system; and
- outgoing second secondary fluid 422m, hot water to the heating system, as well as other inner cavities i. a. 422n, suitable to contain integral functional equipment in or on the intelligent connection block such as thermometers, control valves, filters, sensors, pumps, refilling-, drawing-off-, pressure release and pressure control valves, differential pressure regulator and similar components. The end pieces 42a,42b and the intermediate plate 42c furthermore comprise connecting attachments 423a-423f for the six connections to the three external systems and also may include, when required, connecting attachments 424a-424f for connecting to the heat exchangers. The end pieces also comprise necessary attachments for securing and assembling the integral equipment as previously described. The composite channel block and its parts also comprise holes for insertion of a lockable fastening device 411 to the coupling block 41. In many cases it is preferable, in order to achieve great flexibility for adaptation of the hydraulic equipment and optimum rational production, that one or several of the channel plates are built up of a plurality of thin plate formed elements which are bonded together. Preferably soldering is used to bond the channel plates, the end pieces the intermediate plates and/or the plate formed elements.
   These compact devices built up of specially designed plate heat exchangers 43, 43a,43b and 43c, preferably with an intelligent connection block have great flexibility regarding the configuration and dimensioning of the inner channels 422a-422d, 422f-422m and provide favourable conditions to simply and reliably integrate the controlling means with sensors, compensating units and valves or other adjusting means in other cavities and recesses 422e, 422n available in the intelligent connection block. The end pieces 42a, 42b, the intermediate plate 42c and the channel plates 42d, 42e are brought together in a pile, whereby the holes and recesses i. a. 422a-422e and 422f-422m will form inner channels for the fluids and cavities to contain the aforementioned components. One advantage obtained by the flexibility provided by means of a channel block 42, built up of channel plates is that the inner channels which are formed by the recesses 422a-422e and 422f-422m may be simply arranged by replacing plate or level if required and thus avoid any hindrance in the way, such as another channel, a fastening device, auxiliary equipment or the like.
   Such interchanging or shifting of channels between plates or levels in the intelligent connection block may also be well founded when one needs to change the direction of the channel to obtain optimum placing of filters, pumps, valve regulators, sensors and the like, especially for optimum orientation of the seat, bushings and the like for such equipment. In preferred embodiments where each channel plate 42d, 42e is built up of a plurality of thinner plate formed elements, not shown, the channels and the dimensions and configuration of the inner cavities i. a. 422a-e, 422f-m may be determined by means of the configuration, thickness, number and piling sequence of the plate formed elements. By means of this intelligent connection block comprising inner channels, which are formed by recesses, i. a. 422a-422e and 422f-422m, when the thinner plate formed elements included in the channel plates 42d, 42e are piled together with the end pieces 42a, 42b and the intermediate plate 42c in the desired order on one another, good conditions are made available to achieve easily an intelligent connection block having a high level of functional integration. For example, the filter units, the differential pressure regulator, pumps and control valves, flow transducers, temperature sensors and similar equipment may be installed integrally with the recesses in the intelligent connection block and with connections on suitable outer areas on the intelligent connection block. The intelligent connection block is arranged to be joined to a coupling block 41, whereby the intelligent connection block and all the main connections' coupling attachments arranged together on one end piece. The intelligent connection block may be completely integrated as one end of the adjacent heat exchanger 43,43a. The intermediate plate 42c and the end pieces 42a,42b of the channel plates 42d,42e, can be produced according to several conceivable methods, such as: cut out or stamped out of material having varied thickness, which gives great flexibility for adaptation. The channel plates 42d,42e may also be produced in an inverted manner so that only necessary separating walls are built up in the plates, which in a pile form inner channels in the same way as the recesses. Obviously the channel plates having recesses may be arranged alternatively with channel plates where "the recesses" are formed by intermediate walls. The channel plates may also be "blown" in that two thinner sheets are soldered together except for certain sections where the channel is formed. After soldering air pressure or other pressure media is inserted whereby the unsoldered sections "blow up" and form channels.
   A coupling block 41 having co-ordinated main connections 41a-41f with connection valves for closing and opening the primary connections is usually arranged with at least two of the connection valves co-ordinated for simultaneous opening, closing, respectively. According to one embodiment the connection valves for the primary fluid is co-ordinated for simultaneous opening, closing, respectively, of the primary fluid's inlet and outlet. Likewise the connection valves for at least one secondary fluid may be co-ordinated so as to co-ordinate simultaneous opening, closing, respectively of the secondary fluid's inlet or outlet. It is advantageous to co-ordinate at least three connection valves for simultaneous opening, closing, respectively of the outlets and inlets involved. Alternatively in an assembly for two parallel thermal processes, the three connection valves for the inlets for the three fluids may be co-ordinated for simultaneous opening, closing, respectively, of the three fluids' inlets and/or the three connection valves for the outlets of the three fluids' are co-ordinated for simultaneous opening, closing, respectively, of the outlet. Such a coupling block 41, dependent upon prevailing conditions may, as illustrated in Figures 4a,4b,4c, be arranged on the end piece 42a turned away from the heat exchangers 43,43a,43b or on the end piece 42b turned towards the heat exchangers 43,43a,43b.
   In order to integrate the control and monitoring equipment in a simple, rational and cost-effective manner with the intelligent connection block without the requirement of costly post-machining of the block after production, adaptation of the assembly both in the intelligent connection block and of the equipment is required. Such an example is illustrated in Figure 6, in two variations, with regard to a control valve. Even if the example specifically relates to a control valve the solution principle also, in applicable areas, may be applied to other integral equipment in the intelligent connection block, such as to filters, temperature sensors, pump, safety valves, etc.
   Since the connection block 42 is placed on top of the heat exchanger 43 and is arranged with the channel 422o for outlet of district heating water from the radiator heat exchanger of the device. The channel 422o for the outlet of the district heating water from the device is separated from its outlet channel 422p by a control valve with seating 44h and disk 44c. This seating 44h, is via spokes 44f and a threaded mount 44d provided with a guide 44d fixed against the valve bushing 44a so that a necessary rigid and exact fit i achieved between the seating, disk and bushing. To make the assembly of the seating possible, the mounting has a hole 44d", which is somewhat larger than the outer diameter of the disk. The seating has an O-ring seal 44h', which lies against the intermediate plate of the intelligent connection block and seals the hole between the outlet channels 422o and 422p.
   The intelligent connection block 42, above the hole in the intermediate plate has been provided with an attachment 45 adapted and soldered to the valve bushing 44. The bushing 44a with seating, spindle and disk has been lowered down into the intelligent connection block and fixed with a nut 44b or other fixing device to the attachment 45. The sealing between the bushing and the attachment is provided by an O-ring 44a'. By means of the two O-ring seals 44h' and 44a' and their coordination, relative high tolerances are allowed in the production of the intelligent connection block with its intermediate plate and its holes as well as fastening attachments, without the assembly being more difficult or risk of leakage. In the upper part of Figure 6, an alternative design has been disclosed where the hole in the intermediate plate is collared downwards, which, among other things allows another O-ring seal of the seating. Obviously such collaring of the hole in the intermediate plate may be arranged upwards.
   A heat transferring device according to the present invention comprising an intelligent connection block having inner channels provides uniquely favourable conditions to integrate in the intelligent connection block a differential pressure regulator, in itself simple and at the same time easily produced and cheap, one embodiment of which is illustrated in Figure 6.
   The regulator in Figure 6 comprises a spindle 50, which passes through the inner channels 51 for the inlet of the district heating water, FVₜᵢₗₗ, and 52 district hot water return, FVᵣₑₜᵤᵣ arranged in the intelligent connection block according to the invention. The spindle 50 has at one of its ends a valve disk 53, which works against a seating 54 arranged in the main inlet channel 51 a for the district heating water. The regulator furthermore comprises an intermediate bushing 55 in the intermediate wall between the channels for FVₜᵢₗₗ and FVᵣₑₜᵤᵣ, 51, 52. The intermediate bushing 55 is kept in place by extension on the pressure chamber lining 58c. The differential pressure regulator illustrated in Figure 6 comprises an attachment 58a with a valve cover 58b, with a first upper pressure chamber 59 arranged on the intelligent connection block, positioned to put pressure on the manoeuvre piston 57 co-ordinated with the spindle 50, which works against the upper area of the manoeuvre piston 57 and creates a closing force which through the manoeuvre piston 57 and the spindle 50 acts upon the disk 53 and the seating 54. To influence the movement of the manoeuvre piston 57 and the working of the valve there is also a second, lower pressure chamber 60 and valve spring 61 a,61 b, in series, which act against the manoeuvre piston's lower area and create an opening force. The manoeuvre piston's upper pressure chamber 59, which in this embodiment is arranged in a valve cover associated with the intelligent connection block, can in other embodiments be arranged in recesses inside the channel block, as well as the other functions arranged in the valve cover 58, whereby the valve cover comprises an integral part of the intelligent connection block. To reduce the dimensions of the valve and avoid a large membrane and thus a bulky spring the regulator comprises a so-called pressure relieved valve disk. The pressure relief is achieved by the unreduced inlet pressure pₜᵢₗₗ in the channel 51 a for FVₜᵢₗₗ, which acts on the active area of the valve disk 53, being lead into an inlaid channel 62 in the station of the spindle 50 up into a third pressure chamber 63. The pressure chamber 63 is, in the embodiment as illustrated in Figure 6, arranged in valve cover 58b. The spindle 50 ends at its upper part which is positioned in the pressure chamber 63, with a piston 64, which is placed against the inner surfaces of the pressure chamber in a manner so as to seal it. In Figure 6 the seal illustrated is in the form of an O-ring, but other sealing embodiments, such as sealing surfaces, may be used. The piston 64 at the end of the spindle is composite with the manoeuvre piston 57 and has a cross-section which corresponds to the active area of the disk. The valve hereby is outbalanced and insensitive to the static pressure. The pressure relief channel 62 has been provided with a mouthpiece 65, which partly comprises fastening screw for the valve disk 53 and partly, due to the channel 62b in the mouthpiece having a lesser diameter than the channel 62 in the spindle, constitutes a reduction in the pressure relief channel 62. Said reduction of the liquid flow in and out of the pressure chamber 63, on pressure changes the valve compensates, suppresses the disk's 53, and thereby the spindle's 50, movement to an adapted and steady rate. If the district heating water is expected to contain particles, which disturb the function of the valve, the mouthpiece 65 may be provided with an inlet filter 65b, for example a sintered, porous ceramic or metallic filter. The pressure from the inlet pressure reduced by the gap opening of the disk against the seating 54 is led up to the manoeuvre piston's pressure chamber 59. This is achieved by the liquid, protected from particles by the disk's rear end, is led via a number of small holes into a channel gap 67, which is formed between the spindle 50 and a casing tube 68 arranged around the spindle. Said gap channel 67 at its end has a plurality of small holes 69 in the upper end of the manoeuvre piston 57 which lead into the upper pressure chamber 59 of the manoeuvre piston. Said varied pressure acts on the upper active area of the manoeuvre piston 57 and creates closing force directed against the valve 54 and strives to close the valve. Said closing force is outbalanced for a desired differential pressure of a superimposed opening force, which is created and influenced by,
- the return pressure which creates from the valve seat a directed opening force by means of the pressure prevailing in the channel 52 for FVᵣₑₜᵤᵣ, act upon the lower active area of the manoeuvre piston, when said channel 52, as illustrated in Figure 6, openly communicates with the pressure chamber 60 for the manoeuvre piston's lower active area, which is essentially integrated in the channel 52 for FVᵣₑₜᵤᵣ, and
- an opening force created by one of the valve springs 61 a, 61 b, which in the same way is directed from the valve seat 54 and selected and adapted on the basis of the desired differential pressure of the device. In order to be simple, functional and robust when in use in the intended environment, the valve is provided with a differential pressure predetermined and established during production, determined from a specific condition between the manoeuvre piston's 57 active areas in the upper and lower pressure chambers and the force of the spring. Said determined differential pressure is then maintained automatically over the controlled circuits. The spring arrangement, in order to get low proportionate deviations in the valve's regulating ratio even at great variation of opening level, has been provided with a low spring constant despite being situated at a low spring chamber level. i.e. the arrangement has been designed so that sufficient spring force having simultaneous low spring constant is obtained despite relative short spring length. For example, this may be achieved by means of a spring arrangement comprising two springs 61 a, 61 b having different diameters but the same spring force and spring constant associated with each other via a interconnecting sleeve 61 which binds them together and causes them to co-operate in series and alternately at the same spring chamber level. The valve seat 54, in the embodiment illustrated in Figure 6, is bound together with intermediate bushing 55 and positioned in the part of the channel 51, which comprises the inlet attachment 70 of the channel block for district heating and is sealed against it, in the Figure indicated with O-ring sealing.

The regulator according to Figure 6 is produced and adapted for integration in an intelligent connection block. Obviously it may, according to its basic principles, also be used for an embodiment in a valve housing of its own, adapted for pipe connection, for example. The valve, if so desired, in a simple manner may also be supplemented with adjustment facilities to maintain an eligible differential pressure.

It is a fact that, at least for small houses, the capacity requirement for domestic hot water is essentially the same for most of the buildings. This condition creates both a need and an opening for a simple, easily produced and thus cheap hot water regulator. The equipment available commercially are either both unnecessarily large and expensive or lack any essential function. Therefore they must be supplemented with additional equipment since in these smaller assemblies there prevails a predictable thermal process for hot water preparation. In a heat transferring device according to the present invention, on this basis, it is preferable to use a regulator comprising at least one flow transducer and a valve controlled by the flow transducer, which is integral with the intelligent connection block and arranged to control the primary fluids, the district heating water flow, through the heat exchanger. The regulator is based on a flow transducer, which is illustrated in Figures 7a-7c and preferably arranged to sense the flow in the secondary circuit, whose fluid, the domestic hot water, is to be tempered by the primary fluid in the heat exchanger.

In Figures 7a-7c a flow transducer is illustrated and in Figure 8 a valve is illustrated, these components as well as the compensating units, which are illustrated in Figures 9a-9c and the alternative valve in Figure 10 are integrated with the intelligent connection block's inner cavities and channels, but they may, obviously, also be arranged in their own adapted valve housings, which then, according to the present invention are directly associated and functionally integrated with the intelligent connection block. Obviously the illustrated components, in other applications or similar applications, may be used and installed in their own valve housings, which are adapted to the specific channel or pipe system. The variations of the components suitable to be included in such a regulator which is illustrated in Figures 7a-7c, 8, 9-9c and 10 are intended to be used to control a heat exchanging process for hot water preparation and may be designed and combined in several different variations, depending upon the external conditions they must meet with, but where the common "denominator" is always the flow transducer according to Figures 7a-7c having a main cylinder, a moveable piston and a measuring piston in the main cylinder. The flow transducer may, on production, be given a desired characteristic for its use and for interplay with the adjustment means it co-ordinates with. In its simplest form the regulator comprises a flow transducer combined with only one valve.

The flow transducer illustrated in Figures 7a-7c comprises a measuring piston 82a, which by means of a preferably weak spindle 82b is associated with a hydraulic main cylinder 81 and an axially moveable hydraulic piston 82c in the main cylinder. The measuring piston 82a, according to the embodiments illustrated in Figure 7a, is arranged having good fit, but not completely without clearance, in a flow channel 80a, for example the inlet pipe and also the transducer slider tube 80 for the cold water to a water heater. The measuring cylinder 82a comprises along its casing holes 82d or slots, through which the measuring piston 82a supplies to an expected flow and flow changes and type of fluid and with regard to optional co-ordinating equipment adapted hydraulic properties. The moveable piston 82c in the main cylinder 81, may, dependent upon the formation of the sealing of the piston, as illustrated in Figure 7a, be provided with a long extension in axial direction or as in Figure 7b, a shorter one.

The measuring piston 82a has, in order to make the device, as far as possible, impervious to the domestic water's static pressure, has either a spindle arrangement to outbalance the pressure or in relation to the active piston-transversal-area a proportionally very weak spindle 82b, which joins the piston to the main cylinder's hydraulic piston 82c positioned outside the bushing. When a flow starts or changes, the measuring piston 82a is forced by the differential pressure which arises in the cold water above the measuring piston balanced by the opposing force which is described further in the following, to move in the slider tube. On increased flow towards the open end of the pipe, such as in the water heater and at reduced flow in counter direction. This is achieved by the measuring piston 82a striving by means of holes 82d to keep an area of holes open which correspond to the flow for through flow of the water, or that a corresponding opening area is provided by means of slots. The pressure loss in the cold water which occurs in the piston 82a will vary with the piston's 82a opening degree in a predetermined ratio to the opposing force which above the valves working range is created by springs of the slave cylinder or in a detached flow transducer by means of built in spring arrangement. The pressure fall is selected in as low a range as possible, for example about 0,2 bar and preferably near constant, at the same time as, via the piston's active transversal area, it can be converted to a sufficient adjusting force for the piston of the main cylinder to not cause too large pressure fall in the hot water and thus difficult to manage pressure differences between hot and cold domestic water in the tapwater system.

The measuring piston, which when the flow changes moves axially in the channel or slider tube, is itself comprised of holes and/or slots, a gap between the slider tube and measuring piston and a specific minimum distance between the lower/upper arranged holes/slots in the measuring piston and the slider tube's lower edge when the measuring piston unloaded.

Said configuration of the flow transducer allows a large measuring range or working register in three well defined and "separate stages" from zero to maximum flow; in the first step the piston is pushed in the pipe from a starting point, zero flow position to the lowest real minimum flow it is intended for, whereby liquid can just directly start to run out through the holes or the slots, representing a displacement of hole 84a up to the edge 84b. At this stage the liquid only passes through the gap between piston and slider tube. Concurrent with the displacement of the piston, the flow is allowed to gradually increase in that the length of the clearance is shortened and the relative pressure fall thereby is reduced. This means safeguarding that at the lowest flows the meter does not fluctuate between no-flow and minimum-flow. In step two the piston is displaced further in the slider tube from the beginning of the holes or slots to their end. This is the transducer's real measuring range and is adapted for the main working range. In step three the piston is displaced yet further in the slider tube past the holes or slot openings end, whereon the pressure fall in the transducer gradually increases.

To eliminate the risk of debris and particles in the water depositing on the spindle 82b and thereby risk of function hindrances, the spindle 82b in its entire active length in the water is surrounded by a pipe 82e with a small gap 82f near the spindle 82b. In this manner the water is not changed round the spindle. The main cylinder 81 may be formed in two ways, which is shown in Figures 7a-7b, either with cylinder 81 or piston 82c,82'c, as worked sealing area against the sealing O-ring. The hydraulic piston's 82c, 82'c top 82e is shaped so that it simultaneously hold the function 82e for insertion of the spindle 82b and the function for adjusting the working range of the flow measuring piston 82a. The top 81' of the main cylinder 81 is shaped so that it contains the function 82f for adjusting a required movement stop for the hydraulic piston 82c. The top 81 b", 82f of the main cylinder 81 may, such as is illustrated in Figure 7c, be formed and supplemented so that it contains an electric shutter/switch function 81d for starting and stopping, for example, a circulation pump. The protection tube 8e for the spindle 82b is fixed in a screw 82g, which is threaded in the sensor device's bushings 82h. The end of the screw 82g is shaped as seating for the O-ring sealing in the bushings 82h of the spindle. The spindle sealing of the hydraulic cylinder has been arranged in a corresponding manner. The gap between the O-ring seals is designed as a pressure release with leakage indicating channel 82i. The flow transducer is in this case, as with other components in described embodiments, may be arranged, fixed in a circlip on the cylinder casing via a cover screw having 8-sided keygrip to a threaded attachment soldered to the channel block over the cold water inlet to the heat exchanger. The valve is sealed against the inner casings of the attachments via an O-ring seal.

The illustrated flow transducer in Figures 7a-7c, is primarily intended to be used in co-operation with a slave cylinder, not shown, which may be included in a adjustment means such as valves of the type illustrated in Figures 8 and 10, whereby the flow transducer's main cylinder 81, via a preferably weak hydraulic pipe 10 transfers oil to a slave cylinder, not shown in Figures 7a-c, which is comprised in an adjustment means illustrated in Figures 8 and 10. On fluctuation of the flow in channel 80a, the movement generated by the flow transducer's measuring piston 82a of the main cylinder's piston 82c and with it the forced out/drawn in oil, out and in, respectively, forces the main cylinder 81 via the hydraulic pipe 81 a, to change the position of a slave piston arranged in the slave cylinder, not shown in Figures 7a-c, such as, for example in a movement ratio of the main cylinder piston 82c of 1:10.

According to one embodiment of the present invention a controlled valve according to the embodiment illustrated in Figure 8 may be arranged with the flow transducer. It is preferable, that in a device for the production of domestic hit water in a heat transferring device which is supplied by cold water and hot water from an external source, such as a district heating network, to arrange the control valve to manipulate the district heating water or other equivalent hot water flow through the heat exchanger on the basis of a flow estimate of domestic hot water, whereby the control valve preferably is based on a flow transducer according to any of the variations illustrated in Figures 7a-7c in combination with a control valve according to the embodiment illustrated in Figure 8 and when required supplemented with compensating means according to Figures 9a-9c, alternatively a valve according to Figure 10. The flow transducer is thereby preferably arranged to sense the in-flow of cold water in the domestic hot water circuit. In Figures 8a-8c an alternative compensating unit is illustrated, to be arranged associated with the controlled valve and the flow transducer illustrated in Figure 7, such as illustrated in Figures 7a-c. The compensating unit illustrated in Figure 9a may also be associated with the valve and a flow transducer illustrated in Figure 10 according to any of the illustrated variations in Figures 7a-c. The compensating units illustrated are integrally arranged in an intelligent connection block arranged for a heat exchanger having inner cavities and channels, but obviously may also be arranged in their own adapted valve housings, for example, designed to connect to a conventional pipe system. Obviously, a valve according to Figures 8 or 10 and a flow transducer according to Figure 7a to 7c can be used for other applications and be installed in their own valve housings, which are adapted to the actual channels or pipe system. The embodiments of the control valve illustrated in the figures, are envisaged to be used to control a heat exchange process for hot water preparation and may be designed and combined in several different variants depending upon the external conditions they must work under.

The flow transducer may on production be given the desired properties for its use and in co-operation with the controlled valve regulate outgoing flow of the district heating return based on the readings of the inflow of cold water in the domestic hot water circuit. In its simplest form the control valve comprises a flow transducer according to Figures 7a-c and a flow transducer controlled valve, a suitable embodiment of which is illustrated in Figure 7, where the flow transducer's main cylinder 81 is associated with a simple slave cylinder 85. This will work well under the condition that the following values and criteria are fulfilled:
- the temperature of the incoming cold water is relatively constant, which in practice it is also normally, approx. 10°C
- the temperature of outgoing hot water shall be maintained at a predetermined range, for example at 50° C, and a selected temperature not fluctuating too much from this
- the temperature of incoming district heating water is relatively constant over time, for example, 65° C
- the differential pressure for the district heating water is relatively constant over time, for example, 0.1 MPa
- the district heating server contains a limited amount of water
- The distribution pipe (plumbing) is always kept warm

The control valve with the slave cylinder 85 is according to the illustrated embodiment in Figure 8, connected to the flow transducer's main cylinder 81, shown in Figures 7a-c, via a hydraulic pipe 81 a and the slave cylinder's 85 spring loaded piston 86a is fixed to the spindle 86b of the controlled valve. On drawing-off, the generated movement of the measuring piston 82a with the piston 82c of the main cylinder, and with that the forced out oil of the main cylinder 81 via the hydraulic pipe 81 a is brought to lift the slave piston 86a and therewith the valve disk 86c from its seating 87a for allowing flow of district heating water, for example, in a movement ratio of 1:10 relative the main cylinder piston 81. When drawing-off is reduced or stops, the spring force brings the slave piston 86a, in part to close the valve disk 86c, in part to transfer oil back to the main cylinder 81, which in its turn makes its piston 82c and the measuring piston 82a of the flow transducer to reduce their output and completely return to starting point if the drawing off stops. A specific lowest amount of oil of atmospheric pressure remains in the slave cylinder 85 when the valve disk 86c is completely closed. The cover 85a of the valve with pressure chamber 85b is threaded into the slave cylinder 85 and locked with locking screws. The upper casing part of the slave cylinder 85 is slit with 2-4 recesses for the adjustable spring holding arrangement required to, partly compensate for tolerances for the springs, and partly to somewhat change and adjust desired hot water temperature. The end cover of the valve 85d is threaded on the casing of the slave cylinder and at the same time constitutes counterbalance to the spring holding arrangement and handle for adjusting the spring force and thereby also the hot water temperature. The spring loaded piston 86a comprises a seating for the inner spring and has an extended neck to enable assembly. The piston neck is joined to the spindle via 2-4 slotted screws. The insertion of the bushing is provided with double O-ring seals having intermediate pressure release and drainage channel.

The valve seat 87a is connected via fastening means 87b to the valve housing or bushing, preferably joined to disassemble, for example via threads 87c. The fastening means 87b, may for example be shaped like a pipe in which the spindle 86m can move in, and with the valve seat attached to the end of the pipe. The pipe is further arranged with openings to allow flow there through. The valve seat 87a is further lowered into the channel block's outlet pipe 87 for district heating water from the water heater and is sealed against the pipe with an O-ring seal. This design provides a greatly simplified production and assembly method compared to conventional methods, because no machining requiring high tolerances is required to achieve a valve seat with a good fit with the spindle. Because the valve seat is included as an integral part of the valve, there is always a good fit and because the O-ring sealing in co-operation with the fixing of the bushing the tolerances in the channel in which the valve seat is positioned do not need to be so high.

The slave valve is in this case, as for previously described embodiments of components, fixed in a circlip on the casing of the cylinder via a union nut having 8 sided keyhole to a soldered threaded attachment in the channel block over the district heating outlet from the heat exchanger. The valve is sealed against the inner casing of the attachment via an O-ring seal.

The slave valve, to make the valve insensitive to the static pressure of the district heating water, preferably has a pressure released disk and so as to i. a. bring down the dimensions, a special spring arrangement, which despite a short axial space, can have a low spring constant. The pressure release is achieved by means of a channel arranged in the station of the spindle, which joins the flow channel with a pressure chamber 85b arranged at the other end of the spindle, whereby the spindle at said other end is arranged with a piston which lies in a seal via an O-ring against the inner surfaces of the pressure chamber. This piston has essentially the same transversal area as the disk in the seating cavity against the exposed active area of static pressure. The valve is hereby outbalanced and essentially insensitive to the static pressure in the flow channel. The end cover 85d of the valve is at the same time a handle for adjusting the spring force. The hydraulic oil circuit is at zero flow position always completely without pressure/atmospheric pressure. The valve consists of at least one domestic hot water flow indicating flow transducer piston 82a, positioned in the inlet pipe 82a for the cold water to the water heater, joined via a weak spindle 82f having a weak main hydraulic cylinder 81 with piston 82c, wherein a large movement with little force is converted to sufficiently great pressure to overcome a spring force in at least one slave cylinder 85 with piston 86a which in its turn influences a valve disk 86c in the district heating pipe 87 from the water heater to open and close or stand still continuously in proportion to the need of district heating water flow to provide the required temperature to the domestic hot water. Preferably the valve has a pressure released disk 86c, and a spring arrangement 86d with especially low spring constant in a locked spring housing. The valve's end cover constitutes a handle for adjusting the spring force in said arrangement 86d and thereby the domestic hot water temperature.

In plants where the temperature and/or differential pressure of the district heating water over time has moderate variations upwards, but where, for example the above mentioned values are no more than for short periods, or marginally below, but the above criteria is otherwise valid, the flow transducer and control valve is supplemented with a compensating unit of the type illustrated in Figure 9a. The compensating unit illustrated in Figure 9a comprises a compensating cylinder 88a, a self-acting sensor body 89a, for the temperature in the heat exchanger's outlet for hot water, joined with a spring loaded hydraulic piston 89b in the compensating cylinder 88a, which in its turn is hydraulically joined to the slave cylinder 85 for the control valve, which is illustrated in Figure 7, by means of hydraulic conduit 88b. By means of said compensation, excess temperatures may be essentially avoided by the cylinder 88a of the compensating unit drawing up necessary amounts of oil from the slave cylinder 85 so that the district heating valve reduces its opening degree and its flow of district heating hot water, in order to avoid danger of excess temperatures of the hot water, so-called scalding guard. The compensating cylinder in Figure 9a, which is arranged to sense the temperature of the outgoing domestic hot water from the heat exchanger, is connected to the slave cylinder 85, via a thin hydraulic conduit 88b. The spring loaded hydraulic piston 89b of the compensating cylinder is fixed to a spindle 89f, which is influenced by a thermal sensor body in, for example the space for the outlet 89g for domestic hot water from the water heater's heat transmitting channel element. The temperature range of the sensor body 89a, stroke and necessary spring force may be selected in relation to the desired temperature compensating ability and working range for the compensating cylinder 88a. At the same time this will be a dimensioning factor for the choice of cylinder diameter and spring 89e. The compensating unit's hydraulic piston 89b on its upper side has been formed as seating 89h and guide for the piston spring 89e and on its under side designed with a shoulder 89d as movement stop downwards. Bushing 89i is provided with double O-ring seals 89j,89k, for spindle insertion, with intermediate pressure release and a draining channel 891, which also acts as leakage indicating channel. The holder for the sensor body is shaped in the form of an O-ring sealed pipe 89m lying outside the spindle against the sensor body 89a and the bushing 89i. The pipe 89m is threaded into the bushing 89i via a thread join 89n adjustable during production. The sensor body 89a is fixed to the pipe 89m via notched pins or circlips 89o. The cylinder 88a has at its top a threaded cover 89p with a 6-sided keyhole. The cover at the same time comprises upper seating and control for the piston spring 89e. The compensating cylinder is in this embodiment, as in the previously described components, fixed in a circlip on the cylinder casing via a cover nut with 8-sided key grip to a soldered threaded attachment 89q in the channel block over the hot water outlet from the heat exchanger. The valve is sealed against the inner casing of the attachment via an O-ring seal

In a heat transferring device connected to a system according to the present description having relative stable inlet temperature and a stable differential pressure but which has a district heat server, which contains a larger amount of water and/or a distribution pipe which is not kept warm by through circulation, it is desirable to supplement the control valve with a compensating unit for maintaining heat so as to avoid the district heating water to periodically go cold. Such maintenance of heat is obtained indirectly with a control valve associated with a compensating unit according to Figure 9a, but which is provided with a cylinder part according to Figure 9b or 9c. The compensating units for maintaining heat, which are illustrated in Figure 9b and 9c, comprise a temperature sensor body of the same type and construction as the one illustrated in Figure 9a, therefore only compensating cylinders and the components associated therewith are illustrated in Figure 9b and 9c. The compensating unit in Figure 9b illustrates a compensating cylinder 88a and a compensating piston 89'b arranged in the compensating cylinder. Compensating piston 89'b is provided with an inner "heat maintaining piston" 89'd, which is influenced, at a certain distance to the heat maintaining piston 89'd on the spindle for the temperature sensor body, by a mounted spring loaded sleeve 89'g, which when the temperature of the sensor body has dropped to a level predetermined on production of the compensating piston 89'b, for example 40°C, the heat maintaining piston 89'd is made to press oil from the compensating cylinder 88a to the slave cylinder 85, illustrated in Figure 8, for the control valve which then opens the valve for the district heating water which may transfer heat via the heat exchanger to the hot water. In reverse the heat maintaining piston 89'd closes the district heating valve when the temperature of the sensor body had reached a determined level. The process is developed subsequently to a conventional regulating process around the sensor body for maintaining constant temperature, all this so as no unnecessary long wait for hot domestic water occurs when drawing off starts. The compensating cylinder according to Figure 9b, in principle has the same effect so as to avoid a too high temperature of the hot water as that described with reference to Figure 9a. At too high a temperature of the sensor body, for example a temperature over 50° C, the compensating piston 89'b is lifted by the spindle and the casing 89'b, which when inactive rests on support heels 89'h so that the cylinder 88a of the unit draws the necessary amount of oil from the valve's slave cylinder 85, as according to Figure 8.

In principle a similar but simpler and probably cheaper heat maintaining function for use where the heat maintaining temperature is acceptable, or is desired, to be at the same temperature level as the hot water normally is kept, for example, 50° C, is obtained with the illustrated compensating unit in Figure 9c. There the compensating piston 89"b does not show any movement stop downwards so that, in itself, it may directly influence the slave cylinder 85 for maintaining heat. In such an embodiment it follows that the compensating cylinder according to Figure 9c also, to a certain extent, can compensate the temperature of the hot water at low temperatures of the incoming district heating water more than that which the valve has been dimensioned for, for example lower than the above mentioned 65°C. In reverse, obviously, also for low differential pressure or both of these deviations when occurring simultaneously.

If there are reasons for maintaining heat but an indirect heat maintaining function for the district heating server over the domestic hot water in the heat exchanger is not acceptable and/or where a compensating function for lower district heating temperatures is desired and likewise where a compensating function for higher and larger variations of temperatures of incoming district heating water are desired, the slave cylinder can be designed with built-in compensation for a deviant district heating temperature and which, simultaneously, contains a directly acting heat maintaining function for the district heating server, which is shown by the illustrated valve in Figure 10, with an integral compensating unit, via a mounted self-acting thermal sensor body 91 mounted in the district heating inlet, which by means of a hydraulic transferring device 91 a, 91 b, 92b transfers its position to its own slave piston 92a mounted at the top of the slave cylinder 92c, which in turn effects a device for adapting the district heating valve's lifting height at all the drawing-off flows in relation to what is necessary for the correct hot water temperature, on the basis of the actual temperature of the incoming district heating water, which during drawing-off may vary substantially, for example from 60° C to 120° C without the hot water temperature being changed and which, as with heat maintaining, is kept at 40°C, for example.

A valve according to Figure 10 could, of course, also be supplemented with a corresponding differential pressure sensor against the temperature sensor for compensation also for varying differential pressure in the district heating network.

The control valve with the temperature compensating slave cylinder 92c, according to the illustrated embodiment in Figure 10, which is partly arranged to compensate the valve's lifting height on the basis of varying temperature of incoming district heating water, and partly provide a heat maintaining function, is joined to the described main cylinder 81, illustrated in Figures 7a-c via a thin hydraulic conduit 81 a and the slave cylinder's spring loaded hydraulic piston 93a is fixed in the valve spindle 92d via an arm linkage system 92e, which comprises at least 2 oppositely assembled arm link pairs. The outer pivoting points 92f of the arm linkage system 92e run in the guide rails 92g. The inclination of the longitudinal axis of the guide rails 92g in relation to the longitudinal axis of the spindle is variable and may be influenced by a device, for example, which in its turn, for example, can be influenced of a thermal sensor body 91 for temperature, the district heating water's inlet temperature, for example. The geometry for, in part, the arm linkage system 92e, in part, the guide rails 92g, in part the device for the inclination of the guide rails, may be selected so that the desired properties for the movement of the spindle in relation to the hydraulic piston 93a is obtained in such a manner that the movement may be both weakened or strengthened or varied along the movement. Suspension of the guide rials 92g and the device for the guide rails inclination is, furthermore, arranged so that the device for the inclination of the guide rails may bring the guide rails 92g, without signal of flow to the slave hydraulic piston 92c from the flow transducer piston and main cylinder 81, to lift the spindle 92d and its disk 93c for letting out district heating water for maintaining the heat. On drawing-off, the generated movement of the illustrated measuring piston 82a in Figures 7a-c in the main cylinder's piston 82c, and therefore the forced out oil from the main cylinder 81 via transport through the connected hydraulic pipe 81 a between the cylinders 81, 92c, causes the slave piston 93a to lift, for example in a ratio of 1:10 in relation to the main cylinder piston's 82c movement. The slave piston's 93a movement is transferred via the arm link system 92e to the spindle 92d, depending upon the inclination of the guide rails 92g, for example, depending upon the inlet temperature of the district heating water, so that the appropriate opening degree is attained between the valve disk 93c and the seating 95a for letting through the district heating water to enable the desired domestic hot water temperature is obtained out of the water heater. When the drawing-off is reduced or stops the spring force from the spring arrangement 92b makes the slave piston 93a via the arm linkage system 92e to partly close the valve disk 93c, partly to lead back the oil to the main cylinder 81 which in its turn causes its piston 82c and the sensor piston 83 to reduce its discharge or completely return to the starting point if the drawing-off stops. A specific lowest amount of oil of atmospheric pressure remains in the slave cylinder 92c when the valve disk 93c is completely closed. The valve has pressure loaded disk 93c, and special spring arrangement 92h, similar to that already disclosed for the general case, according to Figure 8.

The cover 92i with the pressure chamber 96b is, at its upper part, shaped as a guide for the device for the guide-rails inclination and their springs 94b, 94g. The cover 92i with the pressure chamber 96b is at its lower part, slotted with at least 2 opposing recesses, not shown, which house the arrangement for the arm linkage system 92e, guide-rails 92g and the device for the inclination of the guide-rails and is, via threaded joints, joined to an intermediate piece 94d, which in its turn, via threaded joints is threaded down over the slave cylinder 92c and where both parts are locked with locking screws. The pivoting point 92f in the guide-rail 92g of the arm linkage system 92e is provided with rollers mounted in bearings, which with a good fit run in the guide-rail path. The guide-rails 92g at their lower areas via an inclining groove 92i along the guide rail's longitudinal axis, are suspended in a shaft in the slotted lower part of the lock 92i. The guide-rails 92g at their upper area, which runs in the device for the inclination of the guide-rails, are shaped as forks whose ends 92ga are provided with a shaft having a heavier pair of rollers mounted in bearings and a weaker roller mounted on the same shaft. The weaker roller runs against an upper spring loaded path 94f with a central part 94e shaped like a cylinder having at least 2 opposing pieces to extending wings of the paths, which has been given an incline which continually strives to bring the end of the guide track 92ga outwards. The heavier rollers run against a lower path 94h with a central part 94c shaped like a cylinder with the same number of extending wings to corresponding paths, which may be moved in a vertical direction, for example, controlled by a temperature, and which strives to bring the end of the guide-rail 92a inwards. If the path 94h is controlled by a temperature in, for example, the district heating water's inlet, then, for example, at rising temperatures, the path of the piston 92a can move downwards and in the reverse at falling temperature the path of the spring 94g is moved upwards. The cylindrical central part 94c is, at its upper end, via a threaded join, connected to a spring loaded transition piece 96d, which in its turn is brought up into the cover 92i. The transition piece 96d receives and transfers, for example, the controlled movement of a temperature from piston 92a. The lower path 94h may also, for example, controlled by a temperature, after it on falling temperature has brought the rollers and the end of the guide-rail to its innermost position, at continued temperature drop, lift the guide-rail, which then at its lower linkage runs in its path 92j against the linkage axle and forces the arm linkages 92e in the outer path of the guide rails 92f, whereby the spindle 92d, after the slave piston 93a is brought downwards and has pressed out as much oil to the main cylinder 81 that the piston 82c of the main cylinder has reached its upper stop, is lifted and the valve disk 93c opens for letting through the district heating water. The casing part of the slave cylinder 92c is slotted with at least 2 opposing recesses for the adjustable spring holding arrangement which is necessary to, on one hand, compensate for tolerances for the springs and on the other hand, to some extent change and adjust to the desired hot water temperature. The end cover of the valve 97 is shaped as outer support for the device 94h for the inclination of the guide rails and at its top end provided with a slotted fixed and adjustable nut 92m, for slave cylinder 92b of the thermal sensor body, for example. The end cover 97 via a threaded join is fixed to the cover's 92i lower area and locked with locking screws to it. A turning ring for adjusting the spring force and thereby also the hot water temperature is threaded on the casing of the slave cylinder 92c and constitutes at the same time abutment for the spring holding arrangement. The piston 93a constitutes seating for the inner spring and has for the requirement of assembling together, an extending neck 93aa. The neck 93aa of the piston is joined to the spindle 92d via at least 2 opposing arm link systems 92e, which are fixed to attachments movable in grooves on the neck of the piston 93aa and the spindle 92d. The spindle passage of the bushing 92n is provided with double O-ring seals having intermediate pressure release and draining channel 92p which also constitute leakage indicating channel. The valve seating 95a via a threaded join 92o is joined to the bushing 92n and lowered into the channel block's outlet pipe for district heating water from the water heater and sealed against the outlet pipe with an O-ring seal. The valve is in this embodiment fixed in a circlip 92q on the cylinder casing via a cover nut 92r with an 8 sided key grip to a soldered attachment in the channel block over the district heating outlet from the heat exchanger. The valve is sealed against the inner casing of the attachment via an O-ring seal. In Figure 9, the sensor body 91 for temperature, may for example, be a temperature sensor having a thin pipe 91 b for hydraulic transfer of the supply temperature of the district heating water, and then positioned, for example, in a sensor pocket in the screw cap for the district heating filter. The sensor pocket at its end is formed as a key hole for a 6-sided key and in its subsequent part with a dimension and tolerance which gives a good fit and thus good position against the casing of the sensor body. The need for a good fit need not be exaggerated since the variation of the temperature over time will be very slow. The slave cylinder according to Figure 10 may, of course, be supplemented and associated with a so called scalding guard, preferably in an embodiment according to Figure 9a. The connection takes place in such a case via the illustrated hydraulic pipe 88b in Figure 10.

The flow transducer illustrated in Figures 11 a-11c is especially suitable to integrally be included in an intelligent connection block in a heat transferring device according to the invention as a flow transducer, for example, measuring energy. The flow transducer comprises measuring cylinder 82a, 82a' with its own built-in opposing force, which is achieved by means of the measuring cylinder 82a, such as illustrated in Figure 11, being associated with a spring arrangement 82h, 82i. This opposing force maintains desired differential pressure over the measuring cylinder 82a via a suitable and adapted spring assembly where the spring constant is reflected in the character of the holes/slots 82d placing over the measuring cylinder's 82a casing, alternatively the slider tube's 82j casing. The spring 82h may, as illustrated in Figure 11a be accommodated exceptionally long for the lowest possible spring constant in the fluid space and thus needs no spindle sealing and thereby no real bushing. A constant spring may also be selected, which may be arranged in or outside the fluid space, to apply opposing force on the measuring cylinder 82a, 82a'. This gives a simplified spreadout of the holed-surface since the typical appearance is linear. The flow transducer according to Figure 6d is arranged integral in an intelligent connection block and comprises also a slider tube 82k, surrounded by an outer channel 821, a dip tube, in which flows the fluid to the flow transducer, whereby the fluid through the dip tube 821 is lead to and into the slider tube 82k where the measuring cylinder is arranged. Alternatively, the measuring cylinder is given a simpler design 82a', such as is illustrated in Figure 11 b, where the measuring cylinder 82a' is arranged to run in a slider tube 82j whereby the slider tube 82j has holes 82d" along its casing or slots whereby the assembled slider tube 82j and the measuring cylinder 82a' provides the equipment it is to co-ordinate with a hydraulic property adapted to the expected flow and flow fluctuation, and the nature of the fluid. In applications where the flow transducer is used for measuring as a part of an energy reading, it is necessary that it generates an outgoing signal, which is mainly proportional to the sensed flow. An appropriate signal is thus received from the measuring cylinder 82a, 82a' by means of inductive measuring of the position of the top 82b of the spindle, whereby an electric signal is generated in the cables 82m. This may be achieved by means of an integral resolver 82n at the upper part of the sensor cylinder, having etched pattern, necessary slide and scale. If the pattern is etched in a transparent material such as glass and the upper part is provided with a window 82p and an exterior analogue scale, cf. Figure 11c, the instantaneous flow may, in addition, be read visually by the position of the top 82 of the spindle in relation to the analogue scale.

The function and essential properties of the flow transducer according to Figures 11a-c have been disclosed in the foregoing whereby as to make clearer, the sensor's first registering stage corresponds a displacement of hole 82q in Figure 11a from its resting position, zero flow, to the lower bottom edge 82r of the slider tube 82k, and in a corresponding way in Figure 11b, the displacement of the upper edge 82r' of the piston 82a in relation to the slider tube's first opening hole.

The characteristic of the flow transducer very nearly may be classified as a so-called orifice plate which continually changes and adapts its measuring range to the flow load and thereby avoids the drawbacks of the orifice plate and which works with a constant, or practically constant, pressure fall over its real flow range.

## Claims

1. A method for controlling a heat exchanging process in a heat transferring device comprising a primary fluid circuit and a secondary fluid circuit, said device including a control unit is adapted to, by using a sensed temperature of the incoming fluid in the primary fluid circuit, a sensed temperature of the incoming fluid in said secondary fluid circuit and a sensed fluid flow in said secondary fluid circuit, control, by means of control means, a fluid flow in the primary fluid circuit so that a proportionally correct flow ratio between an outgoing fluid flow of said secondary fluid circuit and an ingoing fluid flow of said primary fluid circuit is obtained with respect to a temperature requirement of said outgoing fluid, wherein said control unit further is adapted to maintain the temperature of said outgoing fluid at a substantially constant level defined by said temperature requirements, said method being **characterized by** the steps of:
sensing a temperature of the outgoing fluid from said secondary fluid circuit;
transferring a control signal representing said temperature of the outgoing fluid to the control unit;
determining a deviation between said sensed temperature of the outgoing fluid from said secondary fluid circuit and the temperature defined by said temperature requirements; and
if a deviation is determined, adjusting the fluid flow in said primary fluid circuit by means of said control unit so that the temperature of the outgoing fluid of said secondary fluid circuit is maintained at said substantially constant level.

2. The method according to any one of preceding claims, further comprising the steps of:
determining whether a deviation between said sensed temperature of the outgoing fluid from said secondary fluid circuit and the temperature defined by said temperature requirements exceeds a predetermined level; and
if a deviation is determined to exceed said predetermined level, adjusting the fluid flow in said primary fluid circuit by means of said control unit so that the temperature of the outgoing fluid of said secondary fluid circuit is maintained at said substantially constant level.

3. The method according to claim 2, wherein the step of compensating the control of the fluid flow in said primary fluid circuit, in case of a deviation that exceeds said predetermined level, functions as a scalding protection.

4. The method according to claim 2 or 3, wherein said predetermined level of deviation is set so that injuries caused to an user of the outgoing fluid from said secondary fluid circuit can be avoided.

5. The method according to any one of preceding claims 1-4, further comprising the step of:
controlling the fluid flow in said primary fluid circuit using said control unit, in a correct adjusted and working control process, without using the temperature of the outgoing fluid from the secondary circuit so that a proportionally correct flow ratio between an outgoing fluid flow of said secondary fluid circuit and an ingoing fluid flow of said primary fluid circuit is obtained with respect to said temperature requirement of said outgoing fluid.

6. The method according to claim 1-5, wherein said method further comprises the steps of:
sensing a differential pressure of said primary fluid circuit;
transferring a control signal representing said sensed differential pressure to said control unit; and
compensating the control of the fluid flow in said primary fluid circuit by means of said control unit for variations of said control signal representing said sensed differential pressure so that the temperature of the outgoing fluid is maintained at said constant level.

7. The method according to claim 6, wherein the step of sensing the differential pressure comprises the step of sensing the differential pressure between the incoming fluid at a inlet of said primary fluid circuit and the outgoing fluid at an outlet of said primary fluid circuit.

8. The method according to claim 6 or 7, wherein said step of compensating the control of the fluid flow in said primary fluid circuit by means of said control unit for variations of said control signal representing said sensed differential pressure comprises the step of regulating said differential pressure.

9. The method according to claim 6, 7 or 8, wherein said step of compensating control of the fluid flow of said primary fluid circuit by means of said control unit for variations in said fourth control signal comprises the step of maintaining said differential pressure at a constant level.

10. A device for controlling a heat exchanging process in a heat transferring device comprising a primary fluid circuit and a secondary fluid circuit, comprising a primary fluid circuit and a secondary fluid circuit, said device including a control unit is adapted to, by using a sensed temperature of the incoming fluid in the primary fluid circuit obtained by a first temperature sensor connected to the control unit, a sensed temperature of the incoming fluid in said secondary fluid circuit obtained by a second temperature sensor connected to the control unit and a fluid flow in said secondary fluid circuit obtained by a fluid sensor connected to the control unit, control a control means to control a fluid flow in the primary fluid circuit so that a proportionally correct flow ratio between an outgoing fluid flow of said secondary fluid circuit and an ingoing fluid flow of said primary fluid circuit is obtained with respect to a temperature requirement of said outgoing fluid, wherein said control unit further is adapted to maintain the temperature of said outgoing fluid at a substantially constant level defined by said temperature requirements, said method being **characterized by**
a sensor adapted to sense a temperature of the outgoing fluid from said secondary fluid circuit; and
wherein said control unit is adapted to:
obtain a control signal representing the temperature of the outgoing fluid from said secondary fluid circuit;
determine a deviation between said sensed temperature of the outgoing fluid from said secondary fluid circuit and the temperature defined by said temperature requirements; and
if a deviation is determined, control the control means to adjust on opening degree to adjust the fluid flow in said primary fluid circuit so that the temperature of the outgoing fluid of said secondary fluid circuit is maintained at said substantially constant level.

11. The device according to claim 10, wherein said control unit is adapted to
determine whether a deviation between said sensed temperature of the outgoing fluid from said secondary fluid circuit and the temperature defined by said temperature requirements exceeds a predetermined level; and
if a deviation is detected to exceed said predetermined level, control the control means to adjust an opening degree to adjust the fluid flow in said primary fluid circuit by means of said control unit so that the temperature of the outgoing fluid of said secondary fluid circuit is maintained at said substantially constant level.

12. The device according to claim 11, wherein said control unit is adapted to, if a deviation exceeding said predetermined level between said sensed temperature of the outgoing fluid from said secondary fluid circuit and the temperature of the outgoing fluid from said secondary fluid circuit defined by said temperature requirements is determined, adjust an opening degree of said control means in order to function as a scalding protection.

13. The device according to claim 11 or 12, wherein said predetermined level of deviation is set so that injuries caused to an user of the outgoing fluid from said secondary fluid circuit can be avoided.

14. The device according to any one of preceding claims 10-13, wherein said control unit is adapted to:
influence the control means to control the fluid flow in said primary fluid circuit, in a correct adjusted and working control process, without using the temperature of the outgoing fluid from the secondary circuit so that a proportionally correct flow ratio between an outgoing fluid flow of said secondary fluid circuit and an ingoing fluid flow of said primary fluid circuit is obtained with respect to said temperature requirement of said outgoing fluid.

15. The device according to any of the claims 10-14, wherein said device further comprises a sensor connected to said control unit and being arranged to sense the differential pressure of the primary fluid circuit and to transfer a control signal representing said differential pressure to said control unit; and wherein said control unit is arranged to, by utilizing said control means, as a response of said control signal compensate the control of the fluid flow in said primary fluid circuit for variations of said control signal so that the temperature of the outgoing fluid of said secondary fluid circuit is maintained at said constant level.

16. The device according to claim 15, wherein said sensor means are arranged to sense the differential pressure between the incoming fluid at a inlet of said primary fluid circuit and the outgoing fluid at an outlet of said primary fluid circuit.

17. The device according to claim 15 or 16, wherein said control means are arranged to regulate said differential pressure.

18. The device according to claim 15, 16, or 17, wherein said control means are arranged to maintain said differential pressure at a constant level.
